# EUROPÄISCHE PATENTSCHRIFT

(11) **EP 1 625 285 B1**
(45) Veröffentlichungstag und Bekanntmachung des Hinweises auf die Patenterteilung: **05.11.2008**
(21) Anmeldenummer: 04731324.2
(22) Anmeldetag: 06.05.2004
(51) Int. Cl.: F01N 3/022, F01N 3/025, F01N 3/027, F01N 3/035, F01N 3/08, F01N 3/20, F01N 3/28

(54) **VERFAHREN UND VORRICHTUNG ZUR REINIGUNG VON ABGASEN**
METHOD AND DEVICE FOR THE PURIFICATION OF EXHAUST GASES
PROCEDE ET DISPOSITIF D'EPURATION DE GAZ D'ECHAPPEMENT

(30) Priorität: 10.05.2003 EP 03010528
(43) Veröffentlichungstag der Anmeldung: 15.02.2006
(73) Patentinhaber: Universität Stuttgart, 70174 Stuttgart (DE)
(72) Erfinder: FRIEDRICH, Gerhard, 75482 Illingen (DE); KOLIOS, Grigorios, 79540 Lörrach (DE); SCHMEISSER, Volker, 70180 Stuttgart (DE); TUTTLIES, Ute, 73760 Ostfildern (DE); OPFERKUCH, Frank, 72669 Unterensingen (DE); EIGENBERGER, Gerhart, 67435 Neustadt (DE)
(74) Vertreter: Lorenz, Markus
(86) Internationale Anmeldenummer: PCT/EP2004/004793
(87) Internationale Veröffentlichungsnummer: WO 2004/099577

(56) Entgegenhaltungen:
- EP-B- 0 638 140
- WO-A-02/29218
- DE-A- 10 105 185
- DE-A- 19 926 150
- US-A- 5 303 547
- US-B1- 6 207 116

## Beschreibung

Die Erfindung betrifft ein Verfahren zur Reinigung von Abgasen mit brennbaren und NOₓ-haltigen Abgasbestandteilen nach der im Oberbegriff von Anspruch 1 näher definierten Art. Des weiteren betrifft die Erfindung eine Vorrichtung zur Reinigung von Abgasen mit brennbaren, NOₓ-haltigen und/oder partikel- oder rußförmigen Abgasbestandteilen gemäß dem Oberbegriff von Anspruch 7.

### Problemstellung

Abgasströme enthalten häufig brennbare Schadstoffe in Gas- und/oder Partikelform und/oder NOₓ, also Stickoxide. Sie fallen oft bei einer relativ geringen Temperatur an, so dass eine Aufheizung auf die für eine thermische oder katalytische Schadstoffumwandlung notwendige Temperatur erforderlich ist. Eine solche Aufheizung erfordert immer dann hohe Energiemengen, wenn die Abgasströme groß und die Schadstoffkonzentrationen so gering sind, dass ihre Verbrennung keinen wesentlichen Energiebeitrag liefern kann. Das gilt insbesondere für das Abgas von Brennkraftmaschinen. Hier fallen die Abgase beim Kaltstart oder bei nur geringer Motorlast mit einer Temperatur an, die für die bekannten Verfahren der katalytischen Abgasreinigung zu niedrig ist. Dies gilt insbesondere für Dieselmotoren oder im Magerbetrieb betriebene Ottomotoren.

Nach dem allgemeinen Stand der Technik werden für die Abgasreinigung von gasförmigen, brennbaren Bestandteilen vorzugsweise sogenannte autotherme Abgaskonverter eingesetzt, in denen die Schadstoffe mit oder ohne zusätzliche Wärmezufuhr an einem Katalysator oder in einer Brennkammer verbrannt werden und das heiße Abgas zum Aufheizen des kalten Zulaufs genutzt wird.

Für die Motorabgasreinigung werden darüber hinaus Vorrichtungen zur Rückhaltung und/oder Umwandlung von Stickoxiden, vorzugsweise bei Magermotoren sowie Vorrichtungen zur Rückhaltung und Umwandlung von Partikeln, insbesondere Rußpartikeln, vorzugsweise bei Dieselmotoren benötigt. Ebenfalls zum Motor-Abgasstrang gehören Vorrichtungen zur Schalldämpfung und gegebenenfalls zur Wärmeauskopplung zum Zwecke der Abgastemperaturbegrenzung und/oder zur Innenraumheizung.

Nach dem derzeitigen Stand der Technik werden die verschiedenen vorstehend genannten Funktionen durch additive Elemente, wie Vorkatalysator, Hauptkatalysator, Dieselrußfilter, Abgaskühler, Schalldämpfer, realisiert und die dafür notwendigen Abgasbedingungen hauptsächlich durch Eingriffe in die elektronische Motorsteuerung eingestellt. Das führt zu hohen Kosten für den Abgasstrang, zu Platzproblemen im Einbau und zu einer starken Verkopplung mit der Motorsteuerung. Damit wird verhindert, dass die Motorsteuerung ausschließlich auf einen optimalen, verbrauchsarmen Fahrbetrieb optimiert werden kann.

Ziel der Erfindung ist es, ein Verfahren aufzuzeigen, wie die für Otto-Magermotoren und Dieselmotoren erforderlichen unterschiedlichen Abgasbehandlungsschritte in einer von der Motorsteuerung unabhängigen, autarken und kompakten Abgasbehandlungseinheit zusammengefasst werden können und welche Komponenten und Vorrichtungen dazu zweckmäßigerweise zum Einsatz kommen können. Dazu werden im Folgenden zunächst der Stand der Technik bei den einzelnen Komponenten sowie die bisher für eine integrierte Motorabgasreinigung gemachten Vorschläge referiert. Die Erfindung wird anschließend unter Bezug auf den Stand der Technik erläutert und begründet.

### Stand der Technik: Abgaswärmetauscher

Für die Umwandlung brennbarer Abgasbestandteile in kalt anfallenden Abgasen ist die sogenannte autotherme Reaktionsführung seit langem Stand der Technik. Dabei wird der heiße Ablauf aus der Reaktionszone genutzt, um den kalten Zulauf vorzuheizen. Für das Anfahren des kalten Reaktors und zur Kompensation von Wärmeverlusten wird in der Regel eine separate Wärmezufuhr im heißen Teil des Abgasreaktors vorgesehen. Für den Wärmetausch zwischen dem heißen Abgas und dem kalten Zulauf kommen entweder ein rekuperativer bzw. indirekter oder ein regenerativer bzw. direkter Wärmetausch mit einem festen Wärmespeicher zum Einsatz.

Der regenerative Wärmetausch kann sehr effizient durchgeführt werden. Er eignet sich besonders für mittlere und große Volumenströme und erfordert ein periodisches Umschalten der Abgasströme. Der rekuperative Betrieb erfolgt dagegen kontinuierlich und eignet sich damit auch gut für kleine und mittlere Abgasströme. In der Praxis werden hierfür beispielsweise Rohrbündelwärmetauscher eingesetzt, deren Herstellung insbesondere dann aufwändig ist, wenn eine hohe Güte des Wärmerücktauschs erreicht werden soll. Besser geeignet sind Parallelkanal-Wärmetauscher nach Art von Plattenwärmetauschern. Diese lassen sich auch mit einer Reaktionseinheit für die katalytische Umwandlung kombinieren.

Im Hinblick auf solche Parallelkanal-Wärmetauscher-Reaktoren wird auf die EP 0 638 140 B1, die US 6 207 116 B1, die EP 1 016 777 A2, die EP 0 855 653 B1 und die DE 100 40 209 A1 verwiesen, die Kanalanordnungen beschreiben, bei denen ein für eine Abgasreinigung geeigneter Katalysator entweder auf der Wand oder auf zusätzlichen Strukturen in den Kanälen angebracht werden kann.

Plattenwärmetauscher werden in der Regel mit elastischen Dichtungen zwischen den Einzelplatten ausgeführt. Die notwendige Dichtungspressung wird über Zuganker zwischen den massiven Endplatten erreicht. Solche Konzepte sind für eine katalytische oder thermische Abgasreinigung aufgrund der hohen auftretenden Temperaturen sowie aus Gewichtsgründen ungeeignet.

Durchgehend geschweißte oder gelötete Plattenwärmetauscheranordnungen wurden z. B. für Brennstoffzellensysteme mit integrierter Kraftstoffreformierung bekannt. Sie vermeiden die elastischen Dichtungen und die massiven Endplatten, jedoch sind die vielfachen Schweiß- oder Lotnähte kostspielig und fehleranfällig. Außerdem führt die vielfache Strömungsumlenkung in konventionellen Plattenwärmetauscheranordnungen zu einem für eine Abgasreinigung unakzeptablen Druckverlust und gegebenenfalls zu einer unkontrollierten Abscheidung und Verstopfung durch partikelförmige Abgasbestandteile.

Die in der US 6 207 116 B1 sowie in der EP 0 855 653 B1 beschriebenen Parallelkanalkonzepte zeichnen sich durch eine einfache Trennung der Kanäle durch eine ziehharmonikaartige Faltung und eine einfache Strömungsführung aus. Allerdings hat sich bei diesen Konzepten die Gestaltung der Bodenplatten und die dort erforderliche Abdichtung zwischen den Kanälen und dem Außengehäuse als konstruktiv und fertigungstechnisch schwierig erwiesen. Außerdem führt die Strömungsumlenkung bei Ein- und Austritt zu einem erhöhten Druckverlust. Zwar wird in US 6 207 116B1 eine Bauform angegeben, die durch eine Strömungsteilung die Bodenabdichtung vermeidet. Dafür sind in dieser Anordnung alle Einbauelemente doppelt auszuführen. Zusätzlich führt die dort geforderte Profilierung der Trennwände zu einem zusätzlichen Druckverlust. Wie eigene Untersuchungen gezeigt haben, kann der seitliche Zulauf und die Profilierung der Faltung außerdem zu einer verstärkten Rußablagerung und frühzeitigen Verstopfung führen. Das ist umso schlimmer, als diese Verstopfung im kalten Zulaufbereich auftritt und mit einem über die Wärmezufuhr in der Umlenkung initiierten Rußabbrand nicht beseitigt werden kann.

Aus diesen vielschichtigen Gründen haben sich die vorgeschlagenen Plattenwärmetauscherkonzepte bisher in der Praxis der katalytischen oder thermischen Abgasreinigung nicht durchgesetzt. Für die Automobilindustrie kam der Umstand des zusätzlichen Gewichts und Druckverlustes hinzu, so dass sie bislang keinen Eingang in die serienmäßige Anwendung gefunden haben.

### Stand der Technik: Wärmequelle

Auch beim Einsatz eines effizienten Abgaswärmetauschers ist zumindest zum Anfahren des kalten Abgaskonverters eine Wärmequelle erforderlich, die den für die Schadstoffumwandlung maßgebenden Bereich des Konverters auf eine für die Umwandlung erforderliche Temperatur aufheizt. Diese Aufheizung erfolgt bei stationären autothermen Abgasreinigungsanlagen bisher entweder elektrisch oder durch einen Hilfsbrenner, dessen heißes Abgas der heißen Seite des Abgaswärmetauschers zugeführt wird.

Aufgrund des Wärmerücktauschs kann die Leistung der Zusatzheizung bei autothermen Abgasreinigungsanlagen auch bei kaltem Zulauf stark reduziert oder abgeschaltet werden, sobald der Reaktionsbereich des Konverters seine Betriebstemperatur erreicht hat.

Auch für die Autoabgasreinigung wurde die autotherme Reaktionsführung in Verbindung mit einer Wärmezufuhr wiederholt vorgeschlagen. So findet sich in US 6 207 116 B1, in EP 1 016 777 A2, in WO 02/29218 A1, in DE 101 05 185 A1 und in US 2003 0074888 A1 eine Wärmequelle im heißen Teil des Abgaswärmetauschers, die in Form einer elektrischen Beheizung, eines Kraftstoffbrenners oder einer Heißgaszufuhr ausgeführt sein kann. Die Wärmequelle im heißen Teil eines Abgaswärmetauschers kann somit als integraler Teil jeder autothermen Abgasbehandlungseinheit angesehen werden.

Bei Serien-Kraftfahrzeugen erfolgt allerdings das Aufwärmen des Katalysators bisher ausschließlich über das heiße Motorabgas. Dazu wird zum Beispiel mittels der Motorsteuerung und/oder durch Nacheinspritzen und Zünden von Kraftstoff in den Abgaskanälen vor dem Abgaskonverter ein heißes Abgas erzeugt, das den Katalysator schnell aufheizt. Auch elektrisch beheizbare Vorkatalysatoren sind im Einsatz. An ihnen wird nach Motorkaltstart ein brennstoffreiches Abgas gezündet. Die dabei freigesetzt Wärme heizt in der Folge den Hauptkatalysator auf.

Nachteilig bei diesen Konzepten ist die Tatsache, dass die eingetragene bzw. freigesetzte Wärme nicht wie bei den autothermen Konzepten zum großen Teil im heißen Teil des Konverters verbleibt, sondern ausgetragen wird, so dass ein erhöhter Energieverbrauch resultiert. Das gilt insbesondere für den Schwachlastbetrieb von Diesel- und Otto-Magermotoren, bei denen das Abgas in der Regel eine zu niedrige Temperatur für die Schadstoffumwandlung besitzt.

### Stand der Technik: NOₓ-Umwandlung

Allen für eine NOₓ-Umwandlung in molekularen Stickstoff bekannten Verfahren ist gemeinsam, dass sie erst bei höheren Temperaturen (oberhalb von 250°C) zu brauchbaren Umsätzen führen. Die Abgastemperaturen von Otto-Magermotoren und insbesondere Dieselmotoren liegen in vielen Betriebsbereichen häufig niedriger, so dass bisher über die Motorsteuerung eingegriffen wird, wenn der für eine Schadstoffumwandlung erforderliche Temperaturbereich erreicht werden soll. Das führt zu Kraftstoffmehrverbrauch.

Das bei den meisten NOₓ-Umwandlungsverfahren erforderliche Reduktionsmittel wird bei den bisher in Entwicklung befindlichen Konzepten entweder aus einem zusätzlich mitgeführten Hilfsstoff, wie zum Beispiel Harnstoff, freigesetzt oder durch motorische Maßnahmen, wie zum Beispiel Nacheinspritzung, im Motor oder im heißen Abgasrohr erzeugt, so dass vorübergehend ein reduzierendes Abgas entsteht. Die Harnstoff-Variante erfordert einen zusätzlichen Aufwand für Betankung, Bevorratung und Umwandlung. Die Erzeugung durch Nacheinspritzung führt zu erhöhtem Kraftstoffverbrauch, da der Sauerstoffüberschuss des gesamten Abgases durch die Nacheinspritzung verbraucht werden muss.

Bei dem sogenannten Speicherkat-Konzept wird das Reduktionsmittel CO und H₂ bisher durchwegs dadurch erzeugt, dass die Motorsteuerung den Motorbetrieb kurzzeitig so verstellt, dass ein fettes (reduzierendes) Abgas mit hohem CO- und H₂-Gehalt entsteht. Dies führt ebenfalls zu erhöhtem Kraftstoffverbrauch und kann darüber hinaus die Fahrdynamik unvorteilhaft einschränken. Bei schwefelhaltigem Kraftstoff ist bei NOx-Speicherkatalysatoren außerdem in größeren zeitlichen Abständen eine sog. Schwefelregeneration erforderlich, bei der der Katalysator unter reduzierenden Bedingungen auf Temperaturen von 650 bis 750°C aufgeheizt werden muss. Auch diese Temperaturanhebung erfolgt bisher ausschließlich über die Motorsteuerung.

Auch bei den bisher bekannt gewordenen Abgasreinigungskonzepten mit integriertem Wärmetausch und eigener Wärmequelle werden die für die Regeneration des Speicherkatalysators notwendigen reduzierenden Bedingungen mit hohem CO- und H₂-Gehalt stets über die Motorsteuerung eingestellt. So werden in DE 101 05 185 A1 und in US 2003/0074888 A1 Abgasbehandlungseinheiten mit Speicherkatalysator und integrierter Wärmequelle beschrieben, wobei die Wärmequelle ausschließlich zur Einstellung des erforderlichen Temperaturbereichs dient.

### Stand der Technik: Partikel- oder Rußfilterung und Filterregeneration

Das Standardverfahren zur Abtrennung partikelförmiger Bestandteile ist die Filterung. Da sich der Filter dabei zusetzt, muss er in periodischen Abständen oder fortlaufend regeneriert werden. Handelt es sich um brennbare Partikel, so besteht ein nahe liegendes Vorgehen im Abbrennen der Filterbeladung. Das kann entweder in periodischen Abständen erfolgen, indem die Filtertemperatur dazu kurzzeitig über die Zündtemperatur der Partikel angehoben wird. Es kann auch kontinuierlich erfolgen, indem der Filter die ganze Zeit bei einer so hohen Temperatur betrieben wird, dass die abgeschiedenen Partikel schneller abbrennen als sie nachgeliefert werden.

Beide Möglichkeiten werden bei der Dieselpartikelfilterung genutzt. Dazu erfolgt die Abscheidung meist auf porösen keramischen Monolithen, bei denen die Rohgas- und Reingaskanäle schachbrettartig im Monolith angeordnet sind. Die Reingaskanäle sind am Filtereintritt, die Rohgaskanäle am Filteraustritt verschlossen, so dass die Filterung durch die porösen Kanalwände erfolgt.

Der kontinuierliche Filterabbrand ist weitgehend problemlos möglich, wenn die Rohgastemperatur hinreichend hoch ist. Die erforderliche Minimaltemperatur liegt bei normalem Dieselabgas in der Größenordnung von 600°C. Durch Zusätze zum Kraftstoff, oder durch vorherige katalytische Oxidation von NO und Nutzung des gebildeten NO₂ zum Rußabbrand, lässt sich die notwendige Abbrandtemperatur auf Werte bis unter 400°C reduzieren.

Da das Abgas besonders im niedrigen Lastbereich aber wesentlich kälter anfällt, wäre eine erhebliche Zusatzenergie erforderlich, wenn das Abgas ohne Wärmerücktausch auf diese Temperaturen angehoben werden müsste.

Daher sehen viele Dieselfilterkonzepte vor, das Abgas nur in periodischem Abstand auf Zündtemperatur aufzuheizen, wenn sich eine ausreichende Filterbeladung aufgebaut hat. Diese Konzepte funktionieren immer dann zufriedenstellend, wenn die Regeneration bei einer optimalen Filterbeladung gezündet wird. Ist die Filterbeladung zu niedrig, besteht die Gefahr einer unvollständigen Durchzündung und eines unvollständigen Abbrands mit der Folge, dass die Beladung bei der nächsten Regenerierung zu hoch ist. Ist die Filterbeladung zu hoch, so besteht die Gefahr, dass sich eine Abbrandfront mit einer nicht beherrschbaren Maximaltemperatur entwickelt, bei der der Filter und unter Umständen das gesamte Fahrzeug zerstört wird.

Wie eigene Untersuchungen gezeigt haben, kann eine Abbrandfront mit nicht beherrschbarem Maximaltemperaturanstieg immer dann auftreten, wenn die Einströmung in den Filter in der gleichen Richtung wie die Abströmung stattfindet und die Zündung des Abbrands durch Temperaturerhöhung des eintretenden Gases erfolgt. Aufgrund des inhärenten Abbrandrisikos werden Dieselrußfilter zurzeit nur mit aufwändigen Vorkehrungen in Serienfahrzeugen eingesetzt.

Neben den oben genannten Keramikfiltern werden zahlreiche Filtervarianten beschrieben, bei denen eine Oberflächenabscheidung, gegebenenfalls unterstützt durch elektrostatische Aufladung und Agglomeration der Partikel bewirkt werden soll.

Auch die Kombination eines Partikelfilters mit einem Gegenstromwärmetauscher ist Stand der Technik (Opferkuch, Gaiser, Eigenberger: "Entfernung oxidierbarer Aerosole aus Abluftströmen", FZKA-BWPLUS 8 (1998), http://www.bwplus.fzk.de) und "Gegenstromreaktor zur Entfernung oxidierbarer Aerosole aus Abluftströmen" BW-Plus-Forschungsprojekt Nr. 397007, Abschlussbericht Feb. 2001 (http://bwplus.fzk.de/berichte/SBer/PEF397007Ber.pdf). Dabei wird der Partikelfilter im heißen Teil eines Abgaswärmetauschers angeordnet und durch eine Heizvorrichtung vor dem Filter auf einer so hohen Temperatur gehalten, dass die abgeschiedenen Partikel aufgrund der erhöhten Verweilzeit vollständig verbrannt werden. Mit dem beschriebenen Verfahren kann auch eine periodische Filterregeneration durch periodisches Anheben der Filtereintrittstemperatur durchgeführt werden. Allerdings erfolgt die Einströmung in der gleichen Richtung wie die Abströmung, sodass dabei der vorstehend beschriebene, nicht kontrollierbare Temperaturanstieg beim periodischen Rußabbrand auftreten kann. Auch in WO 02/29218 A1 wird die Integration eines Filterelements in den heißen Teil eines Gegenstromwärmetauschers beschrieben. Aus der Beschreibung folgt, dass es sich dabei offensichtlich um eine Oberflächenabscheidung auf den profilierten Wänden der Strömungskanäle handeln soll, die gegebenenfalls durch eine zwischen den Wänden angeordnete Filtermatte verstärkt wird. Wie bereits unter dem Punkt "Stand der Technik: Abgaswärmetauscher" erläutert, kann diese Bauform bei der Dieselpartikelfilterung zu einer schnellen Verstopfung im kalten Teil führen.

Aus diesen vielschichtigen Gründen sucht die Kraftfahrzeugindustrie immer noch intensiv nach technisch einfachen Lösungen, die eine gute Rußabscheidung und eine sichere Rußfilterregeneration mit niedrigem Druckverlust und Zusatzenergieverbrauch ermöglichen.

### Stand der Technik: Integration von Autoabgaskomponenten

Die verschiedenen Komponenten zur Abgasbehandlung von Motorabgas stellen mittlerweile wertmäßig einen signifikanten Teil der Kosten des Antriebsstrangs dar. Neben Abgaskatalysator, NOₓ-Katalysator und Dieselrußfilter zählen dazu der Abgasschalldämpfer und gegebenenfalls auch Einrichtungen für die Fahrzeuginnenraumheizung bzw. Standheizung.

Wenn der Betrieb des Autoabgaskonverters wie derzeit üblich über die Motorsteuerung beeinflusst wird, hat es sich unter Umständen als notwendig erwiesen, den Katalysator in mehrere Einheiten aufzuspalten und diese motornah und motorfern anzuordnen. Das trägt zu einer weiteren Kostensteigerung und gegebenenfalls Gewichtszunahme bei.

Demgegenüber hätte eine Zusammenfassung aller dafür notwendiger Einheiten zu einem Abgasmodul und seine autonome Regelung unabhängig von der Motorsteuerung kostenmäßige, funktionelle und gegebenenfalls auch gewichtsmäßige Vorteile.

Eine solche Zusammenfassung erscheint aber bisher nur teilweise möglich. So wird, wie vorstehend beschrieben, sowohl die Integration von Autoabgaskatalysatoren, von NOx-Speicherkatalysatoren oder von Rußfiltern in den entsprechend temperierten Teilen eines Abgaswärmetauschers vorgeschlagen, wobei die benötigte Zusatzenergie elektrisch oder durch einen Kraftstoffbrenner zugeführt wird. Allerdings wird sowohl in DE 101 05 185 A1 wie in US 2003/0074888 A1 davon ausgegangen, dass die für die Regeneration des NOₓ-Speicherkatalysators notwendige reduzierende und CO bzw. H₂ enthaltende Atmosphäre durch Veränderung der Motorsteuerung mit Nacheinspritzung im Zylinder oder dem daran anschließenden Abgasrohr eingestellt werden muss. Auch in den Beschreibungen zu US 2003/0074888 A1 und WO 02/29218 A1 wird unterstellt, dass nach wie vor mehrere getrennte Abgasbehandlungskomponenten wie Vor- und Hauptkatalysatoren vorhanden sind und ihr Betrieb nicht unabhängig von der Motorsteuerung erfolgen kann.

### Erfindung

Es ist daher Aufgabe der vorliegenden Erfindung, ein Verfahren zur Reinigung von Abgasen mit brennbaren, NOₓ-haltigen und gegebenenfalls partikel- oder rußförmigen Abgasbestandteilen Abgasbestandteilen zu schaffen, das es erlaubt, alle für die Schadstoffumwandlung und gegebenenfalls für die Abgasschalldämpfung sowie die Auskopplung von Abgaswärme notwendigen Teilsysteme in einer einzigen, kompakten Einheit zusammenzufassen und unabhängig von der Steuerung des Verbrennungsmotors unter den für die Schadstoffumwandlung notwendigen Bedingungen zu betreiben.

Des Weiteren ist es Aufgabe der Erfindung, geeignete Vorrichtungen für dieses Verfahren zu entwickeln, die konstruktiv und fertigungstechnisch einfach aufgebaut sind und die verschiedenen benötigten Funktionen in eine Einheit zu integrieren gestatten.

Erfindungsgemäß wird diese Aufgabe durch die in den Ansprüchen genannten Merkmale gelöst.

Die Grundform der Erfindung bildet ein Verfahren zur Reinigung von NOₓ-haltigen und gegebenenfalls partikelförmigen Motorabgasen. Es integriert die folgenden Funktionen in eine gemeinsame Abgasbehandlungseinheit, die unabhängig von der Motorsteuerung von einer eigenen Steuerung so betrieben wird, dass die jeweiligen optimalen Umwandlungsbedingungen in der Abgasbehandlungseinheit eingestellt werden.

Die erste Funktion ist ein effizienter, druckverlustarmer und verstopfungsunempfindlicher Wärmetausch zwischen dem eintretenden und dem die Einheit verlassenden Motorabgas. Er wird zweckmäßigerweise als Parallelkanalgegenstromwärmetauscher mit axialer Anströmung und weitgehend glatten Kanälen realisiert. Die zweite Funktion ist die Entfernung und/oder katalytische Umwandlung der störenden Schadstoffkomponenten. Sie erfolgt in bekannter Weise durch in den Wärmetauscher integrierte oder an den Wärmetauscher angeschlossene Katalysatoren und/oder Filter. Die dritte Funktion ist die Zuführung von Wärme. Sie erfolgt gemeinsam mit der vierten Funktion, der periodischen Einstellung von reduzierenden Abgasbedingungen mit deutlich erhöhtem CO- und H₂-Gehalt. Dazu wird Kraftstoff mit Luft oder einem sauerstoffhaltigen Abgas vermischt und an einem elektrisch vorheizbaren Katalysator partiell oder vollständig oxidiert. Das so entstehende Gas wird dem Abgas am heißen Ende des Abgaswärmetauschers dort zugemischt, wo das Abgas von den Einström- in die Ausströmkanäle übertritt. Die fünfte Funktion ist die automatische Steuerung der Einstellung von Temperatur und Zusammensetzung dieses Zumischstroms so, dass der katalytisch aktive Bereich nach einem Kaltstart schnell auf die für eine Schadstoffumsetzung notwendige Temperatur gebracht, der vorzugsweise als NOx-Speicherkatalysator ausgeführte Entstickungskatalysator periodisch regeneriert und in größeren zeitlichen Abständen von Sulfat befreit wird und gegebenenfalls die für eine Rußfilterregeneration notwendigen Bedingungen eingestellt werden. Dazu kann die Steuereinheit mit entsprechenden Sensoren und Aktuatoren versehen sein. Optional können zwei weitere Aufgaben hinzukommen: Die Integration eines Wärmetauschers zur Aufheizung von Luft für die Innenraumheizung des Fahrzeugs sowie die Abgasschalldämpfung, z.B. durch aktive oder passive Elemente zur akustischen Schallabschwächung.

Obwohl für jede einzelne der genannten Aufgaben Lösungen existieren, ist die Zusammenfassung in die beschriebene gemeinsame Abgasbehandlungseinheit neu und Kern des beanspruchten Verfahrens.

Ebenfalls neu sind die im Folgenden beschriebenen Vorrichtungen und Apparate, die zweckmäßig zur Realisierung des genannten Verfahrens eingesetzt werden. Dabei handelt es sich um verschiedene Bauformen für einen Parallelkanal-Wärmetauscher mit axialer, druckverlustarmer und verschmutzungsunempfindlicher Anströmung, für Partikelfilter mit neuartiger Strömungsführung und sichererem Regenerationsverhalten und zur Integration oder Verbindung des Wärmetauschers mit der Partikelfilterung sowie zur Integration aller Komponenten in eine gemeinsame apparative Einheit.

Die Grundform der Erfindung und ihre zweckmäßigen Ausgestaltungen werden im Folgenden anhand der Zeichnungen prinzipmäßig dargestellt und erläutert.

Es zeigen:
- Fig. 1: Eine Schemazeichnung, die die Anordnung der Einzelkomponenten der erfindungsgemäßen Abgasbehandlungseinheit am Beispiel einer Dieselabgasreinigung zeigt;
- Fig. 2: eine zweite Ausführungsform des erfindungsgemäßen Abgaskonverters;
- Fig. 3: einen Einströmkanal des Abgaskonverters aus Fig. 2;
- Fig. 4: die Ein- und Ausströmkanäle des Abgaskonverters aus Fig. 2;
- Fig. 5: eine erste Möglichkeit zur Bildung des Einströmkanals;
- Fig. 6: eine zweite Möglichkeit zur Bildung des Einströmkanals;
- Fig. 7: eine Möglichkeit zur Bildung mehrerer Einströmkanäle;
- Fig. 8: eine dritte Möglichkeit zur Bildung des Einströmkanals;
- Fig. 9: eine Abwicklung der Seitenwände eines Einströmkanals;
- Fig. 10: eine erste Möglichkeit zur Bildung des Einströmbereichs in den Einströmkanal;
- Fig. 11: eine zweite Möglichkeit zur Bildung des Einströmbereichs in den Einströmkanal;
- Fig. 12: eine dritte Möglichkeit zur Bildung des Einströmbereichs in den Einströmkanal;
- Fig. 13: eine dritte Ausführungsform des erfindungsgemäßen Abgaskonverters gemäß dem Schnitt XIII-XIII aus Fig. 14;
- Fig. 14: eine Ansicht gemäß dem Pfeil XIV aus Fig. 13;
- Fig. 15: eine vierte Ausführungsform des erfindungsgemäßen Abgaskonverters gemäß dem Schnitt XV-XV aus Fig. 16;
- Fig. 16: eine Ansicht gemäß dem Schnitt XVI-XVI aus Fig. 15;
- Fig. 17: eine fünfte Ausführungsform des Abgaskonverters;
- Fig. 18: eine alternative Ausführungsform zu Fig. 17; und
- Fig. 19: eine weitere alternative Ausführungsform zu Fig. 17;
- Fig. 20: eine Ausführungsform des Abgaskonverters aus einem porösen und teilverschlossenen Material in Form eines Monoliths mit rechteckigen Waben;

Die nachfolgende Beschreibung der Erfindung gliedert sich in
- eine Erläuterung des erfindungsgemäßen Verfahrens,
- eine Erläuterung des erfindungsgemäßen apparativen Konzepts und zweckmäßiger Varianten des Abgaswärmetauschers,
- eine Beschreibung erfindungsgemäßer Ausführungen der Wärmequellen und ihrer Nutzung zur Bereitstellung von Wärme und von reduzierendem Abgas,
- die Beschreibung der erfindungsgemäßen Ausgestaltung der Stickoxid-Umwandlung nach dem NOₓ-Speicherkat-Konzept und ihre Integration in den Abgaskonverter,
- die Beschreibung verschiedener erfindungsgemäßer Varianten für die Abscheidung und Umwandlung brennbarer, partikulärer Abgasbestandteile wie Dieselruß und ihre Integration in den Abgaskonverter, sowie die Beschreibung eines neuen Gestaltungsprinzips für ein Partikelfilter mit einem gegenüber den bisherigen Filtern sichereren Abbrandverhaltens,
- die Beschreibung der Integration unterschiedlicher Abgasbehandlungsfunktionen in einem erfindungsgemäßen Abgaskonverter.

### Allgemeines beanspruchtes Verfahren

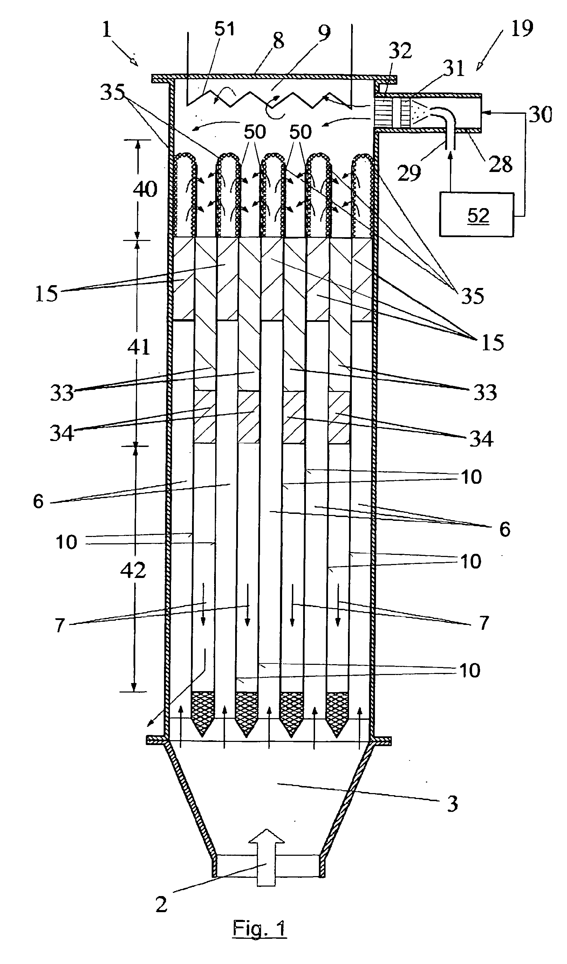

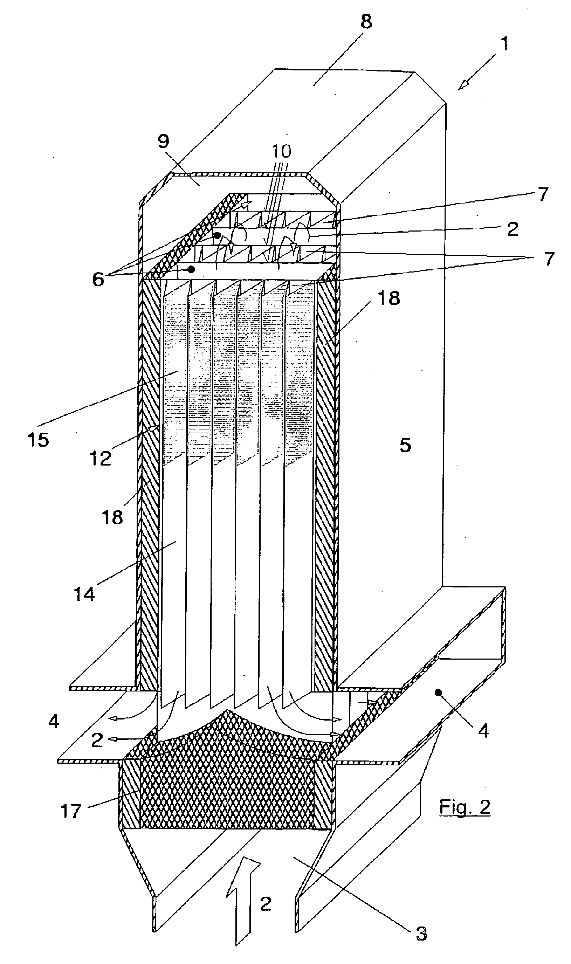

Das allgemeine Verfahrensprinzip wird anhand von Fig. 1 am Beispiel der Dieselabgasreinigung erläutert. Ein aus einer nicht dargestellten Brennkraftmaschine stammender Abgasstrom 2 tritt über einen Einlass 3 in einen Abgaskonverter 1 ein und teilt sich auf mehrere Einströmkanäle 6 auf. Hier wird er von dem in Ausströmkanälen 7 entgegenströmenden Abgas aufgeheizt. An in den Einström- und den Abströmkanälen angebrachtem Katalysatoren 15, 33 und 34 finden die notwendigen Umwandlungsreaktionen statt, im betrachteten Beispiel eine Aufoxidation von NO zu NO₂ an Katalysator 15, eine Speicherreaktion von NOx oder die Speicherregeneration am Katalysator 33 und eine Nachoxidation an Katalysator 34. Rußförmige Partikel werden im Rußfilter 35 entfernt, wonach der Abgasstrom aus den Einströmkanälen 6 in die Ausströmkanäle 7 übertritt und diese, wie in Fig. 2 gezeigt, in der Nähe des Einlasses 3 durch einen Auslass 4 seitlich verlässt. Der bisher beschriebene Aufbau umfasst somit einen Filterbereich 40, einen Katalysatorbereich 41 und einen reinen Wärmetauscherbereich 42, die sich gegebenenfalls überlappen.

An einen oberen Umlenkbereich 9 angeschlossen ist ein katalytischer Brenner 19, in dem ein sauerstoffhaltiger Strom (Luft und/oder Motorabgas) 30 mit Kraftstoff 29 vermischt und an einem elektrisch beheizbaren Edelmetallkatalysator 31 und einem nachfolgenden unbeheizten Katalysator 32 entweder partiell zu CO und H₂ oxidiert oder vollständig verbrannt wird. Das austretende heiße Gas wird dem Abgas in der Umlenkung zugemischt.

Bei Bedarf kann über einen Wärmetauscher 51 im Bereich einer Haube 8 Wärme aus dem Bereich der oberen Umlenkung abgezogen und z.B. zur Vorwärmung von Heizluft eingesetzt werden. Alternativ kann der Wärmetauscher auch in einem (nicht gezeigten) Abzugskanal angeordnet sein, über den ein Teil des Gases aus der Haube 8 abgezogen und ins Freie geleitet wird.

Eine Regel- und Steuereinheit 52 dient dazu, den Zulauf an sauerstoffhaltigem Gas 30 und Kraftstoff 29 zum katalytischen Brenner 19 so zu regulieren, dass stets die erforderlichen zeitlich veränderlichen Betriebsbedingungen in der Abgasbehandlungseinheit eingestellt werden. Das kann durch partielle oder vollständige Verbrennung des zugeführten Kraftstoffs erfolgen, wobei der Brennerablauf dem Abgas im Bereich der Umlenkung zugemischt wird. Eine direkte Aufheizung der für die Schadstoffumwandlung und Rückhaltung maßgebenden Bereiche kann auch reaktiv erfolgen, indem die bei der partiellen Oxidation im Brenner 19 erzeugten Komponenten (CO und H₂) mit dem sauerstoffhaltigen Abgas in den Ausströmkanälen 7 katalytisch oxidiert werden.

### Allgemeines apparatives Gestaltungskonzept und Abgaswärmetausch

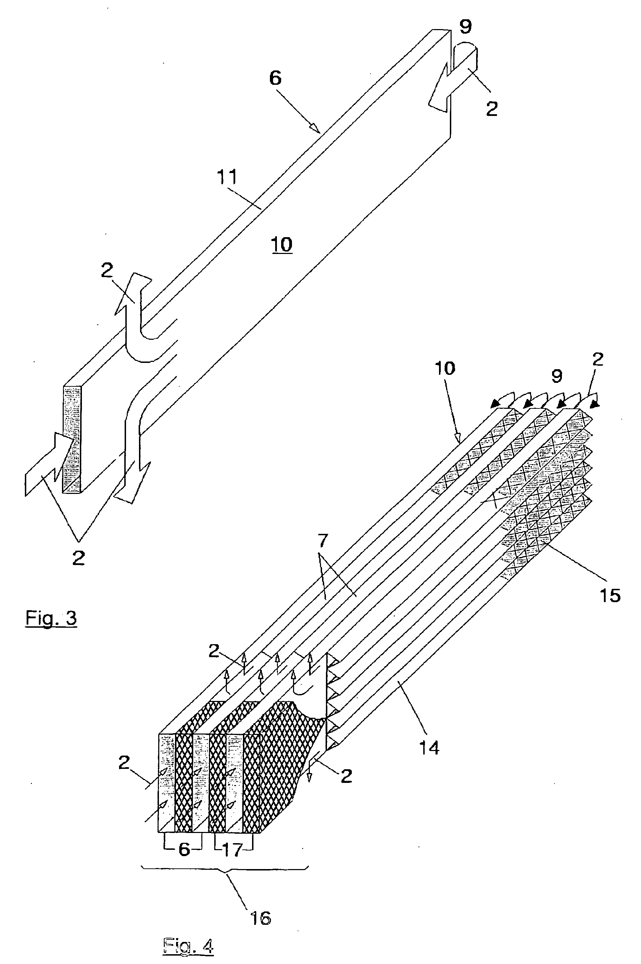

Im Folgenden wird die apparative Gestaltung anhand von Fig. 2 dargestellt und in den Fig. 3 bis 14 näher erläutert.

Fig. 2 zeigt die Vorrichtung zur Reinigung von Abgasen in Form des Abgaskonverters 1, die zur Umwandlung brennbarer, gasförmiger und NOₓ-haltiger Bestandteile in dem mit Pfeilen angedeuteten Abgasstrom 2 dient. Aus Übersichtlichkeitsgründen sind nicht alle Pfeile, die den Verlauf des Abgasstroms 2 kennzeichnen, mit dem Bezugszeichen 2 bezeichnet. Der Abgaskonverter 1 schließt sich vorzugsweise an eine ebenfalls nicht dargestellte Brennkraftmaschine an.

Der Abgaskonverter 1 weist den Einlassbereich 3, über den der Abgasstrom 2 dem Abgaskonverter 1 zugeführt wird, und den Auslassbereich 4 auf, der zur Abführung des Abgasstroms 2 aus dem Abgaskonverter 1 dient. Der Einlassbereich 3 und der Auslassbereich 4 sind als Öffnungen in einem beispielsweise aus Edelstahl bestehenden Gehäuse 5 ausgebildet, welches ebenfalls Teil des Abgaskonverters 1 ist.

Innerhalb des Gehäuses 5 sind mehrere Einströmkanäle 6 und mehrere, zwischen den Einströmkanälen 6 sich befindliche Ausströmkanäle 7 angeordnet. Hierbei sind die Einströmkanäle 6 mit dem Einlassbereich 3 und die Ausströmkanäle 7 mit dem Auslassbereich 4 verbunden. Die Einströmkanäle 6 und die Ausströmkanäle 7 sind wie in Fig. 4 gezeigt im Sinne einer Parallelkanalanordnung 16 aus einer Abfolge der Einströmkanäle 6 und der Ausströmkanäle 7 innerhalb des Gehäuses 5 angeordnet und bilden zusammen mit dem Gehäuse 5 einen Abgaswärmetauscher 12.

Den Einströmkanälen 6 wird der Abgasstrom 2 aus dem Einlassbereich 3 axial zugeführt. Er tritt am gegenüberliegenden Ende der Einströmkanäle aus, wird in einem durch eine Haube 8 des Gehäuses 5 begrenzten Umlenkbereich 9 umgelenkt und strömt im Gegenstrom zum eintretenden Gas in den Ausströmkanälen 7 zurück. Die Hauptströmungsrichtung des Abgasstroms 2 in den Ausströmkanälen 7 ist also der Hauptströmungsrichtung des Abgasstroms 2 in den Einströmkanälen 6 im Wesentlichen entgegengerichtet. Kurz oberhalb des Einlassbereichs 3 tritt der Abgasstrom 2 dann über den Auslassbereich 4 seitlich aus dem Gehäuse 5 aus.

In Fig. 3 ist ein einzelner Einströmkanal 6 dargestellt. Dieser weist in diesem Fall eine flache, rechteckige Form auf und ist an je zwei Seiten von seitlichen Wandungen 10 und Stirnflächen 11 abgeschlossen. Die Einströmkanäle 6 können somit als an ihrer Mantelfläche allseitig geschlossene, weitgehend glatte, Kanäle betrachtet werden und sind auf diese Weise gegen die Ausströmkanäle 7 abgetrennt. Die beiden weiteren Seiten der Einströmkanäle 6 sind selbstverständlich geöffnet und führen, wie oben erwähnt, einerseits zu dem Einlassbereich 3 und andererseits zu dem Umlenkbereich 9. Die Einströmkanäle 6 können auch andere Formen aufweisen, von denen einige unter Bezugnahme auf die Figuren 4, 5, 6, 7, 13, 14 und 20 beschrieben werden. Dort sind auch beispielhaft einige Herstellungsmöglichkeiten für die Einströmkanäle 6 angegeben.

Fig. 4 zeigt die Anordnung der Ausströmkanäle 7 gegenüber den Einströmkanälen 6. Dort ist erkennbar, dass die Ausströmkanäle 7 jeweils durch die seitlichen Wandungen 10 benachbarter Einströmkanäle 6 gebildet werden. Die Stirnflächen der Ausströmkanäle 7 werden, wie in Fig. 1 erkennbar, durch das Gehäuse 5 gebildet, so dass die Ausströmkanäle 7 an sich keine eigenen Wandungen besitzen, sondern lediglich durch Lücken bzw. Zwischenräume zwischen den Einströmkanälen 6 gebildet werden. Die Ausströmkanäle 7 können somit als offene Kanäle betrachtet werden.

Im Inneren der Einströmkanäle 6 befinden sich jeweilige Distanzelemente 14, die zur Versteifung des Abgaskonverters 1 und zur Verbesserung des Wärmeübergangs aufgrund der vergrößerten Wärmeübertragungsfläche und der von ihnen erzeugten Rippenwirkung dienen und als Träger für Katalysatoren 15 geeignet sind. Die Distanzelemente 14 sind des Weiteren in der Lage, die Abgasströmung 2 insbesondere in dem Einlassbereich 3 und in dem Auslassbereich 4 in Querrichtung zu verteilen. Selbstverständlich können für die Distanzelemente 14 sehr viele verschiedene Formen eingesetzt werden, wobei eine hier bevorzugte Struktur durch in Wellenform profilierte Bleche gebildet wird. Die Distanzelemente 14 werden dann vorzugsweise so eingebaut, dass die Wellenberge bzw. -täler in Strömungsrichtung des Abgasstromes 2 verlaufen und eine druckverlustarme und gegen Ablagerungen unempfindliche Durchströmung gewährleisten. Prinzipiell können die Distanzelemente 14 sowohl einteilig mit den seitlichen Wandungen 10 als auch als separate Bauteile ausgebildet sein. Des Weiteren ist es auch möglich, dieselben innerhalb der Ausströmkanäle 7 anzubringen.

Die Katalysatoren 15, die in den Figuren 2 und 4 nur als Beschichtung auf den Distanzelementen 14 dargestellt sind, sorgen für die katalytische Reaktion der Schadstoffe in dem Abgasstrom 2, die in an sich bekannter Weise verläuft und daher hier nicht näher beschrieben wird. Die Katalysatoren 15 können prinzipiell an der Innen- und/oder Außenseite der seitlichen Wandungen 10 bzw. den Stirnflächen 11, an den Distanzelementen 14 oder eingelegt bzw. als Schüttung in den Einströmkanälen 6 und/oder den Ausströmkanälen 7 an den Stellen angeordnet sein, an denen sich der für die jeweilige Umwandlung günstigste Temperaturbereich einstellt. Dies gilt auch für die Speichermaterialien und Partikelfilter, die zur besseren Umsetzung der Schadstoffe auf der Innenseite und/oder der Außenseite der Wandungen 10 und den Stirnflächen 11 sowie auf den Distanzelementen 14 zusätzlich zu oder anstelle der Katalysatoren 15 angeordnet sein können und auf die weiter unten noch näher eingegangen wird.

Weitere Distanzelemente 14, welche insbesondere bei einer dünnen und ebenen Ausführung der seitlichen Wandungen 10 der Einströmkanäle 6 eingesetzt werden, sind in den Ausströmkanäle 7 angeordnet und erstrecken sich innerhalb der Ausströmkanäle 7 von einem Einströmkanal 6 zum nächsten Einströmkanal 6, so dass die Ausströmkanäle 7 auch ohne eigene Wandungen ein starres Gebilde darstellen. Bei der Herstellung des Abgaskonverters 1 werden mehrere Einströmkanäle 6 mit Distanzelementen 14 so aufeinander gestapelt, dass zwischen den geschlossenen Einströmkanälen 6 die Zwischenräume entstehen, in denen sich die offenen Ausströmkanäle 7 ergeben. Ein Stapel aus geschlossenen Einströmkanälen 6 und offenen Ausströmkanälen 7, das sogenannte Parallelkanalpaket 16 (Fig. 4) wird wie in Fig. 2 erkennbar von dem äußeren Gehäuse 5 umschlossen und bildet zusammen mit dem Gehäuse 5 den Gegenstrom-Abgaswärmetauscher 12.

Zwischen dem Einlassbereich 3 und dem Auslassbereich 4 ist eine temperaturbeständige Dichtungseinrichtung 17 angeordnet, die dafür sorgt, dass ein Gasfluss von dem Einlassbereich 3 direkt in den Auslassbereich 4 vermieden oder zumindest erheblich minimiert wird. Die Dichtungseinrichtung 17 kann mineralische und/oder grafitische Fasermaterialien und/oder Blähton und/oder eine Vergussmasse sowie eine Falz-, Schweiß- und/oder Lötverbindung aufweisen. Zwischen dem Gehäuse 5 und dem Parallelkanalpaket 16 befindet sich eine flexible Dichtungseinrichtung 18, die eine vibrationsarme Lage des Parallelkanalpakets in dem Gehäuse 5 gewährleistet.

Die Dichtungseinrichtung 17 ist für einen weiten Temperaturbereich ausgelegt, der bei Hochlast der Brennkraftmaschine 600 bis 700°C überschreiten kann und gewährleistet neben der Abdichtung eine feste Verbindung des Parallelkanalpakets 16 mit dem Gehäuse 5. In der Regel ist keine vollständige Gasdichtigkeit erforderlich, da ein Gasschlupf bzw. Gasverlust von wenigen Prozent zwischen dem Einlassbereich 3 und dem Auslassbereich 4 die Reinigungsleistung des Abgaskonverters 1 nicht entscheidend beeinflusst.

Die feste Verbindung des Parallelkanalpakets 16 mit dem Gehäuse 5 zwischen dem Auslassbereich 4 und dem Einlassbereich 3 bewirkt, dass sich das Parallelkanalpaket 16 bei Temperaturänderungen unabhängig von dem Gehäuse 5 ausdehnen kann.

Für den Aufbau und die Herstellung der Einströmkanäle 6 existieren vielfältige Möglichkeiten. Sie werden vorzugsweise aus Blech, insbesondere einem Edelstahlblech, gefertigt, das die notwendigen Eigenschaften bezüglich Temperatur- und Korrosionsfestigkeit besitzt. Alternativ hierzu können die Einströmkanäle 6 auch aus Keramik, z.B. in Röhrenform hergestellt werden, welche im Wärmetauscherbereich 42 dicht gebrannt oder mit einer Dichtmasse versiegelt ist.

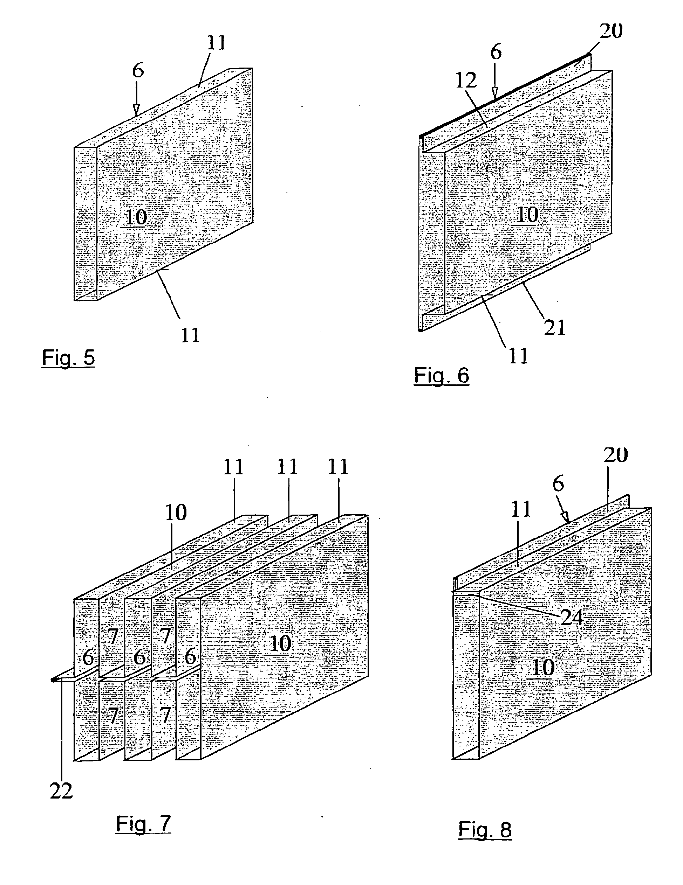

Die Figuren 5, 6, 7 und 8 zeigen verschiedene Ausführungsformen zur Bildung der Einströmkanäle 6, welche allesamt aus Blech bestehen. In der Grundstruktur gemäß Fig. 5 ist der Einströmkanal 6 mit einem rechteckigen Querschnitt ausgebildet und kann nahtlos geschweißt oder gelötet sein.

Der Einströmkanal 6 gemäß Fig. 6 besteht aus einem oder mehreren Teilen, wobei sich im vorliegenden Fall zwischen der seitlichen Wandung 10 und der oberen Stirnwand 11 eine Längsnaht 20 sowie zwischen der seitlichen Wandung 10 und der unteren Stirnwand 11 eine Längsnaht 21 befindet, die beide durch Umbiegen des Blechwerkstoffes entstehen.

Der in Fig. 7 dargestellte Aufbau der Einströmkanäle 6 weist ziehharmonikaförmige Mehrfachtaschen auf, welche die geschlossenen Einströmkanäle 6 bilden. Auch hier ist zwischen zwei aufeinander folgenden Einströmkanälen 6 jeweils ein offener Ausströmkanal 7 vorgesehen. Dabei ist im mittleren Bereich der seitlichen Wandung 10 des linken Einströmkanals 6 eine Längsnaht 22 vorgesehen, welche anstatt des durchgehenden Bleches im Bereich der seitlichen Wandung 10 des rechten Einströmkanals 6 auch dort vorgesehen sein könnte. Somit entspricht der in Fig. 7 dargestellte Aufbau dem Parallelkanalpaket 16, welches in diesem Fall drei miteinander verbundene, geschlossene Einströmkanäle 6 und sechs durch jeweilige Mittelstege 23 getrennte, offene Ausströmkanäle 7 aufweist. Selbstverständlich könnte auch jede beliebige andere Anzahl an Einströmkanälen 6 und Ausströmkanälen 7 vorgesehen sein.

Um die Einströmkanäle 6 abzudichten, kann bei der Ausführungsform der Einströmkanäle 6 gemäß Fig. 8 im Bereich der oberen Stirnwand 11 ein Dichtstreifen 24 vorgesehen sein, der mit der oberen Längsnaht 20 kombiniert ist. Diese schon sehr gute, jedoch nicht absolute Gasdichtigkeit der Einströmkanäle 6 kann dabei sowohl durch den alleinigen Einsatz des Dichtstreifens 24 als auch allein durch die Falzung der Längsnaht 20 erreicht und durch eine Schweiß- oder Lötverbindung verbessert werden.

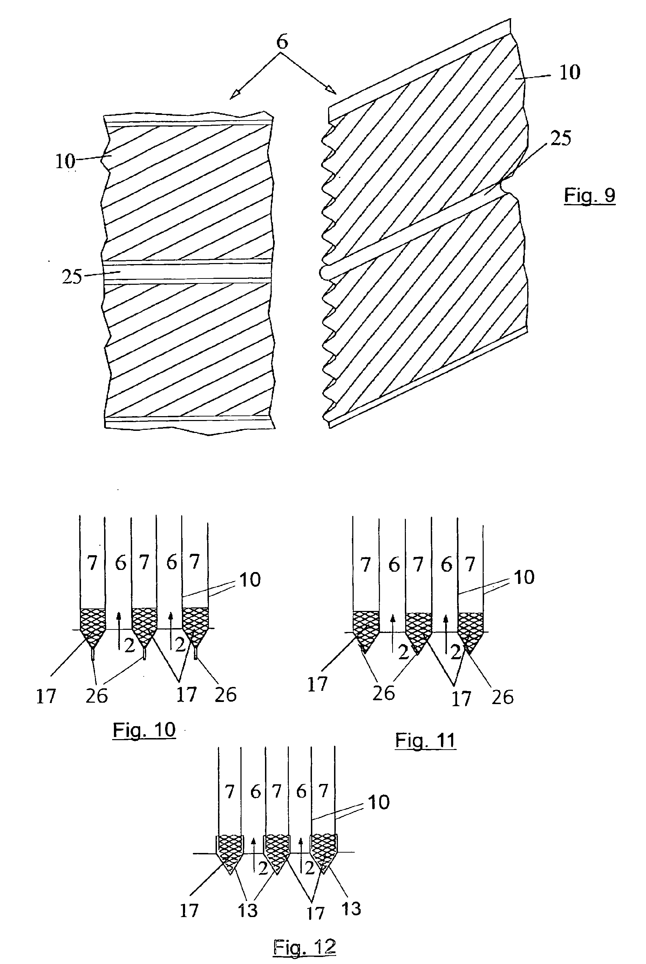

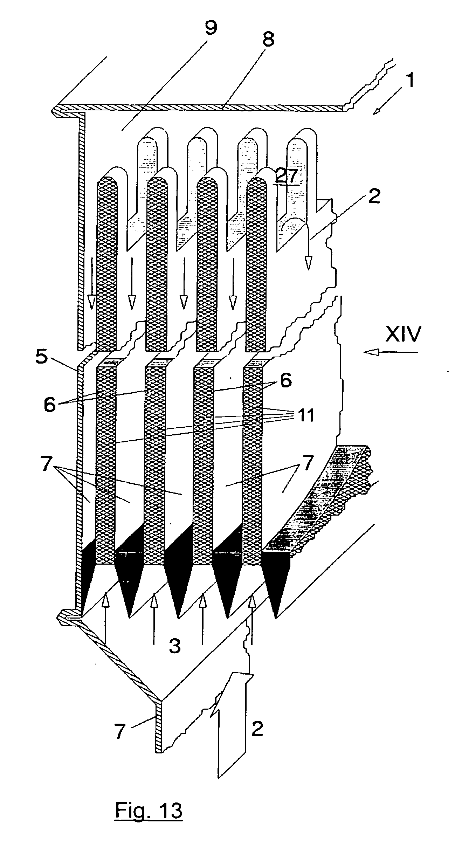

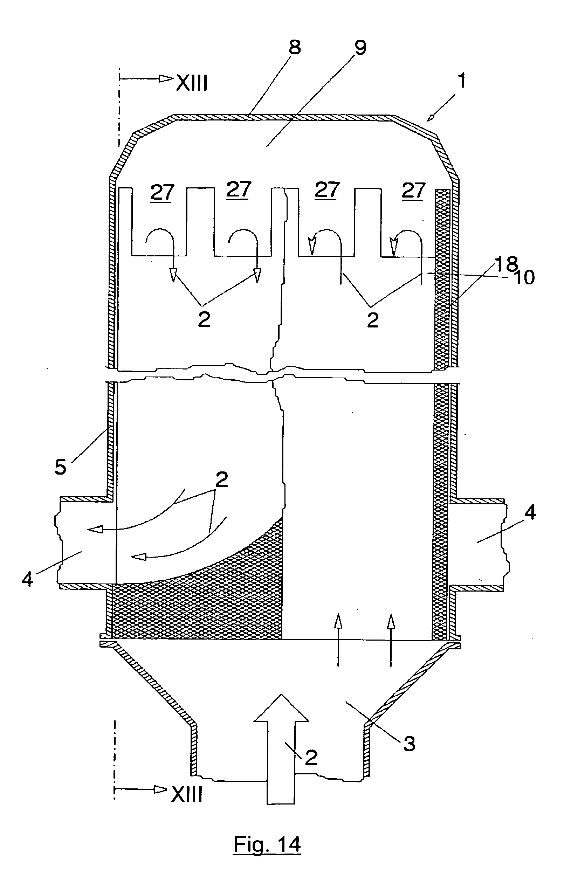

Die seitlichen Wandungen 10 der Einströmkanäle 6 können entweder, wie in den Figuren 4 bis 7 dargestellt, glatt sein, wobei es dann sinnvoll ist, zur Versteifung des Abgaskonverters 1 die Distanzelemente 14 in die Einströmkanäle 6 und/oder die Ausströmkanäle 7 einzulegen. Gemäß der in Fig. 9 dargestellten Ausführungsform der seitlichen Wandungen 10 sind dieselben mit einer solchen Prägestruktur versehen, dass die sich gegenüberliegenden seitlichen Wandungen 10 sich gegenseitig abstützen sowie für einen guten Wärmeübergang, eine gezielte Strömungsführung und eine gute Quervermischung sorgen. In der dargestellten Ausführungsform sind die Wandungen 10 wellförmig geprägt und weisen in Längsrichtung verlaufende Sicken 25 auf. Wenn die mit den schräg verlaufenden Wellen geprägten Wandungen 10 über die in Längsrichtung verlaufenden Sicken 25 zusammengefaltet werden, so kann ein Einströmkanal 6 wie in Fig. 8 dargestellt hergestellt werden. Dieser weist dann eine eingeprägte, gekreuzte Wellstruktur auf. Auf diese Weise lässt sich auch das Parallelkanalpaket 16 nach Fig. 7 oder nach den später noch erläuterten Figuren 13 und 14 durch Faltung aus einem fortlaufend geprägten Blechband herstellen.

Insbesondere lässt sich eine solche Struktur im Zustand gemäß Fig. 9 z.B. durch Sprühbeschichtung abschnittweise mit unterschiedlichen Katalysatoren 15 versehen, wie es für den Abgaskonverter gemäß Fig. 1 erforderlich ist. Falten und Ausbildungen der Längsnaht 20 kann dann ohne unzulässige Temperaturbeanspruchung des Katalysators durch Falzen, Punkt-, Rollnaht- oder Laserschweißen erfolgen.

Zur Vermeidung von verstopfenden Rußablagerungen, insbesondere im kalten Bereich, wird bei rußhaltigem Abgas eine Bauweise mit glatten Wänden gemäß Fig. 5 bis 8 und eingelegten, katalytisch beschichteten Distanzelementen 14 empfohlen.

Um den Druckverlust des Abgasstroms 2 in dem Einlassbereich 3 des Abgaskonverters 1 und die Verstopfungsgefahr durch Rußablagerung zu verringern, können die Einströmkanäle 6 gemäß den Ausführungsformen der Figuren 10, 11 und 12 mit verschiedenen Einlaufformen ausgeführt werden. Bei der Ausführungsform gemäß Fig. 10 berühren sich die seitlichen Wandungen 10 von aufeinander folgenden Einströmkanälen 6, was eine Vergrößerung der Öffnungen der Einströmkanäle 6 zur Folge hat. Die seitlichen Wandungen 10 von aufeinander folgenden Kanälen können dabei beispielsweise über Punkt- oder Linienverschweißung miteinander verbunden werden.

Bei der Ausführungsform gemäß Fig. 10 und 11 sind außerdem die seitlichen Wandungen 10 der geschlossenen Einströmkanäle 6 über den eigentlichen Eintritt in die Einströmkanäle 6 hinaus in Richtung des Einlassbereiches 3 verlängert, was zu Vorsprüngen 26 führt. Diese Vorsprünge 26 können beim Zusammenbau des Parallelkanalpakets 16 wie in Fig. 11 dargestellt über das entsprechend geformte Dichtmaterial der Dichtungseinrichtung 17 zurückgebogen werden, so dass sich eine strömungsgünstige Anströmung der Einströmkanäle 6 ergibt. Fig. 12 zeigt eine Ausführung ohne die Vorsprünge 26, bei der das Dichtmaterial 17 durch strömungsgünstig geformte Kappen 13, welche vorzugsweise aus Blech bestehen, abgedeckt ist. Dabei können die Kappen 13 z.B. durch Distanzelemente 14 in den Einströmkanälen 6 festgeklemmt sein.

Eine weitere Möglichkeit zum Aufbau des Parallelkanalpakets 16 zeigen die Figuren 13 und 14. Dabei sind die seitlichen Wandungen 10 der Einströmkanäle 6 mäanderförmig nach oben und unten gefaltet, im Gegensatz zur Darstellung gemäß Fig. 7, jedoch nicht senkrecht zur Strömungsrichtung sondern parallel dazu. Der Abgasstrom 2 tritt in die auch weiterhin an ihrer Unterseite offenen, taschenförmigen Einströmkanäle 6 ein. Sie sind über ihrer ganzen Länge an ihren Stirnseiten in Richtung des Gehäuses 5 abgedichtet. In dem Umlenkbereich 9 befinden sich in den seitlichen Wandungen 10 der Einströmkanäle 6 jeweils Öffnungen 27, durch welche der Abgasstrom 2 in den Umlenkbereich 9 bzw. in die Ausströmkanäle 7 übertritt. Auch hier bilden die den Einströmkanälen 6 unmittelbar benachbarten Zwischenräume die Ausströmkanäle 7, durch welche der Abgasstrom 2 zurückströmt. Das umschließende Gehäuse 5 ist wie in Fig. 2 unten seitlich geöffnet, um dem Abgasstrom 2 das Verlassen des Abgaskonverters 1 über den Auslassbereich 4 zu erlauben. Anstelle der hier dargestellten, durchgehenden, mehrfach mäanderförmig gefalteten Wandung, die die seitlichen Wandungen 10 bildet und die Öffnungen 27 aufweist, kann das Parallelkanalpaket 16 gemäß Fig. 13 und Fig. 14 auch aus mehreren, lediglich an ihrer Unterseite gefalteten Wandungen bestehen, die nach oben offen sind. Die strömungsgünstige Form des Eintritts in die Einströmkanäle 6 lässt sich dabei, wie in Fig. 13 gezeigt, besonders einfach realisieren.

Bei bestimmten Ausführungen, in bestimmten Einbausituationen oder bei bestimmten Anforderungen kann es zweckmäßig sein, die Strömungsrichtung des Abgasstroms 2 umzudrehen, d.h. das Abgas seitlich dem Auslassbereich 4 und somit den offenen Auslasskanälen 7 zuzuführen und am Einlassbereich 3 abzuziehen. Dies gilt für sämtliche hierin beschriebenen Ausführungsformen des Abgaskonverters 1, wobei die prinzipielle Funktionsweise desselben dadurch nicht beeinflusst wird. Die axiale Anströmung der Einlasskanäle 6 ist in einem solchen Fall allerdings nicht mehr gegeben.

### Wärmequelle und Erzeugung von Reduktionsmittel

Wie in Fig. 1 gezeigt, ist in dem Umlenkbereich 9 ein katalytischer Brenner 19 angeordnet, der insbesondere zum Anfahren des kalten Abgaskonverters 1 und zur Erzeugung eines Reduktionsmittels für den NOₓ-Katalysator erforderlich ist, wobei die Wärmezufuhr durch teilweises oder vollständiges Verbrennen von Kraftstoff erfolgt.

Der katalytische Brenner 19 ist zweckmäßig wie bei einem sogenannten E-Katalysator aufgeteilt in einen elektrisch beheizbaren Vorkatalysator 31 und einen daran anschließenden Hauptkatalysator 32. Zum Anfahren und zum schnellen Aufheizen wird er mit einem mageren (sauerstoffreichen) Kraftstoff-Gasgemisch betrieben, dessen Zusammensetzung so eingestellt ist, dass die thermische Belastung des verwendeten Materials nicht überschritten wird. Als Gas kommt Luft, sauerstoffhaltiges Abgas oder eine Mischung von Luft und Abgas in Frage.

Zur Erzeugung eines CO-Wasserstoff-Gemischs als chemischer Wärmeträger und als Reduktionsmittel für die Stickoxidumwandlung wird der katalytische Brenner 19 mit einem fetten (sauerstoffarmen) Kraftstoff-Gasgemisch betrieben, wobei der Kraftstoff nur partiell oxidiert wird. In diesem Betriebszustand kann die Zugabe von Wasser zur Begrenzung der Maximaltemperatur und zur Erzeugung eines wasserstoffreichen Reduktionsmittels sinnvoll sein.

Der katalytische Brenner 19 kann daher erfindungsgemäß zum thermischen Aufheizen des Abgaskonverters 1 bei Kaltstart, zur Einstellung und Aufrechterhaltung einer optimalen Temperaturverteilung in den Katalysatorbereichen, zur Erzeugung eines CO-Wasserstoffgemischs als Reduktionsmittel für DeNOₓ-Katalysatoren oder als chemischer Wärmeträger für eine nachgeschaltete katalytische Oxidation, zum Zünden des Abbrands von partikelförmigen Ablagerungen und zur Hochtemperaturentschwefelung von zu einem späteren Zeitpunkt beschriebenen NOₓ-Speicherkatalysatoren eingesetzt werden. Dazu ist er mit einer eigenen Regel- und Steuereinheit 52 zu versehen, die die Luft-, Abgas- und Brennstoffzufuhr nach Bedarf verändert.

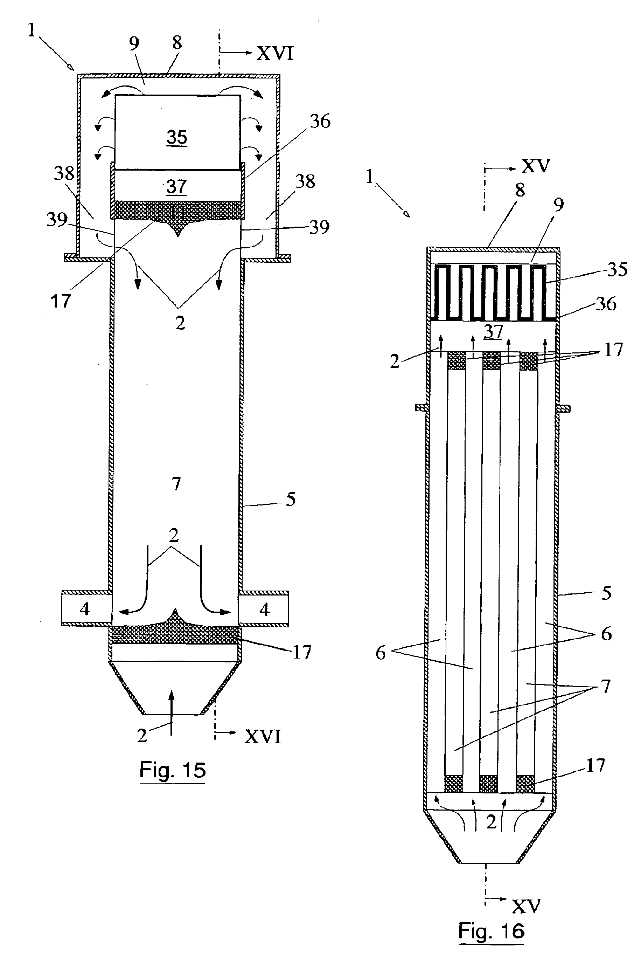

Fig. 1 zeigt eine Ausführungsform der Wärmezufuhreinrichtung 19 in Form des katalytischen Brenners 19 zur Zuführung von Wärme in den Umlenkbereich 9 des Abgaskonverters 1. Der katalytische Brenner 19 weist dabei einen Zuführstutzen 28 auf, in welchen über eine Kraftstoffleitung 29 Kraftstoff eingespritzt und über eine Gaszuführung 30 mit Sauerstoff vermischt und verdüst wird. In dem Zuführstutzen 28 befinden sich des Weiteren der elektrisch beheizbare Monolithkatalysator bzw. Vorkatalysator 31 und gegebenenfalls ein weiterer Nachkatalysator 32. Die Gaszuführung 30 kann ein Zusatzluftstrom oder ein Teilstrom des (sauerstoffhaltigen) Abgasstroms 2 sein. Das Kraftstoff-Gasgemisch wird über den Monolithkatalysator 31 und 32 geführt, dabei voll- oder teiloxidiert und dem Abgasstrom 2 in dem Umlenkbereich 9 zugeführt. Der katalytische Brenner 19 soll derart mit der Haube 8 des Gehäuses 5 bzw. dem Filtervorraum 37 (Fig. 16) verbunden sein, dass das Brenngas zugeführt und auf alle Ausströmkanäle 7 bzw. alle Kanäle des Partikelfilters 35 gleichmäßig verteilt wird. Eine solche Verteilung kann auch durch zusätzliche Maßnahmen, wie z.B. Loch- oder Führungsbleche unterstützt werden.

### Stickoxidumwandlung

Allen für eine NOₓ-Umwandlung in molekularen Stickstoff bekannten Verfahren ist gemeinsam, dass sie erst bei Temperaturen um 300 - 400°C zu guten Umsätzen führen. Die Abgastemperaturen von Otto-Magermotoren und insbesondere Dieselmotoren liegen in vielen Betriebsbereichen häufig niedriger, so dass die vorstehend beschriebene, gezielte und energieeffiziente Anhebung der Abgastemperatur unabhängig von der Motorsteuerung für alle technisch üblichen Verfahren der NOx-Reduktion von Vorteil ist.

Besondere Vorteile ergeben sich für das sogenannte Speicherkat-Konzept bei Magermotoren, bei dem NO und/oder NO₂ in Form von Alkali- oder Erdalkali-Nitrat im Katalysator gespeichert wird. Ist die Speicherkapazität erschöpft, so muss der Speicher regeneriert werden. Dazu wird kurzzeitig ein reduzierendes Abgas mit einem erhöhten Gehalt an CO und Wasserstoff erzeugt. Diese Komponenten wandeln das Nitrat in Oxid oder Karbonat zurück. Das freigesetzte NOₓ reagiert mit Wasserstoff oder CO zu Stickstoff und Wasser oder CO₂.

Wie bereits erläutert kann das hierfür erforderliche Reduktionsmittel statt wie bisher durch Nacheinspritzung im Motor zweckmäßigerweise durch partielle Oxidation und/oder Reformierung in dem katalytischen Brenner 19 des Abgaskonverters 1 erzeugt werden. Ein hierfür vorgesehener NOₓ-Umwandlungs- und/oder Speicherkatalysator 33 wird daher zweckmäßig in den Ausströmkanälen 7 unmittelbar hinter dem Umlenkbereich 9 angeordnet, wenn das Reduktionsmittel in dem Umlenkbereich 9 zugegeben wird. Hinter dem Speicherkatalysator kann sich ein Oxidationskatalysator 34 mit Sauerstoffspeicherfähigkeit anschließen, um das Durchbrechen von nicht umgesetztem CO und H₂ während der Regenerationsphase zu verhindern.

Wenn mindestens zwei im wesentlichen baugleiche Abgaskonverter 1 parallel betrieben werden, so kann ein Verfahren zur Reinigung von Abgasen mit NOₓ-haltigen Abgasbestandteilen durchgeführt werden, bei dem für den Zeitraum der Regeneration des NOₓ-Umwandlungs- und/oder - speicherkatalysators 33 der Abgasstrom durch die zu regenerierende Einheit gedrosselt wird, so dass die Regeneration mit einem deutlich reduzierten Regenerationsmittelverbrauch durchgerührt werden kann.

Mit der periodischen Bereitstellung von Reduktionsmittel durch partielle Oxidation in dem katalytischen Brenner 19 findet ein periodischer Wärmeeintrag in dem Umlenkbereich 9 statt. Dadurch kann der Zusatzwärmebedarf für die Aufheizung des Abgases auf die erforderliche Umwandlungstemperatur erfindungsgemäß (weitgehend) gedeckt werden, wenn der Wärmerücktausch in dem Abgaswärmetauscher 12 wirksam genug ausgerührt wird.

Im Fall des NOₓ-Speicherkatalysators 33 erfolgt diese Wärmezufuhr nur im Takt der Regeneration des NOₓ-Speicherkatalysators 33. Dann stellt sich an dem NOₓ-Speicherkatalysator 33 ein in einer bestimmten Bandbreite schwankender Temperaturverlauf ein. Für die Funktion des NOₓ-Speicherkatalysators 33 ist dies ein Vorteil, da die Einspeicherung von NOₓ auch bei Temperaturen bis unter 300°C brauchbar abläuft, während für eine schnelle und vollständige Regeneration Temperaturen um 400°C vorteilhaft sind. Zudem sorgt der integrierte Wärmetausch dafür, dass die taktweise zugeführte Wärme im heißen Teil zurückgehalten wird, so dass sich die Temperatur im NOₓ-Speicherkatalysator über einer Taktdauer nur wenig ändert.

Auch die bei dem NOₓ-Speicherkatalysator 33 gegebenenfalls notwendige gelegentliche Hochtemperatur-Schwefelregeneration kann durch Kraftstoffverbrennung über den katalytischen Brenner 19 eingeleitet werden.

Nachstehend wird auf Partikelfilter 35 eingegangen, die entfallen können, wenn das Abgas keine Partikel enthält.

### Partikelfilter und ihre Regeneration

Enthält das Abgas brennbare Partikel (Sporen, Mikroorganismen, organische Stäube, Ruß) so sollen diese so lange im heißen Bereich des Abgaskonverters 1 verweilen, bis sie umgewandelt oder vollständig verbrannt sind. Dazu muss ihre Verweilzeit in der Regel gegenüber der Gasverweilzeit deutlich verlängert werden. Das erfolgt erfindungsgemäß durch eine Verzögerung des Partikeltransports durch häufigen Wandkontakt oder durch eine Abfilterung mit kontinuierlichem oder periodischem Abbrand auf dem Partikelfilter 35.

Die erfindungsgemäße Lösung eines intrinsisch sicheren Partikelfilterabbrands kann auf mehreren Wegen erfolgen. Eine Lösung besteht darin, den Partikelfilter 35 die ganze Zeit bei so hoher Temperatur zu betreiben, dass die Verweilzeit der Partikel für einen vollständigen Abbrand ausreicht und keine Akkumulation der Beladung stattfindet. Diese Lösung bietet sich insbesondere dann an, wenn vor dem Partikelfilter ein Oxidationskatalysator angeordnet ist, der NO zu NO₂ oxidiert, so dass der Filterabbrand nach dem sogenannten CRT-Verfahren (continuous regeneration trap) bereits bei niedrigen Temperaturen durch NO₂ erfolgt.

Eine zweite Lösung besteht darin, dass der Abbrand durch periodische Wärmezufuhr in so kurzen Intervallen erfolgt, dass sich keine hohe Filterbeladung aufbaut. Aufgrund des effizienten Wärmerücktauschs in dem erfindungsgemäßen Abgaskonverter 1 sind beide Wege ohne wesentlich erhöhte Energiezufuhr möglich. Bei hoher Partikelkonzentration kann zudem die beim Abbrand freigesetzte Wärme den Wärmebedarf für die erforderliche Abgasaufheizung decken.

Eine dritte erfindungsgemäße Lösung besteht darin, die Gasströmung durch den Partikelfilter 35 so zu führen, dass es nicht zu dem eingangs beschriebenen Anstieg der Filtertemperatur mit der stromab laufenden Abbrandfront kommt. Das ist dann der Fall, wenn die Strömung in dem Partikelfilter 35 so umgelenkt wird, dass sich ein Gegenstrom oder ein Kreuz-(gegen-)strom zwischen dem in das Partikel filter 35 ein- und dem aus dem Partikelfilter 35 ausströmenden Gas einstellt.

Diese Gegenstromführung lässt sich wegen des ohnehin vorhandenen Gegenstromwärmetauschers 12 im erfindungsgemäßen Abgaskonverter 1 gemäß Fig. 1, 13 und 14 besonders einfach realisieren, wenn die Öffnungen 27 in den Einströmkanälen 6 im Umlenkbereich 9 mit Filtermaterial verschlossen werden, so dass ein Partikelfilter 35 entsteht, aus dem das Gas in die Ausströmkanäle 7 übertritt. Die Ausströmkanäle 7 sind zur Haube 8 hin offen. Für die Zündung des Abbrands gibt es mehrere erfindungsgemäße Alternativen:
1) Der katalytische Brenner 19 wird zur Zündung des Abbrands mit Luftüberschuss betrieben. Dann tritt heißes Brenngas aus dem Brenner 19 in die Ausströmkanäle 7 ein, wobei die Zündung des Filterabbrands stets im Gegenstrom zum eintretenden Abgas erfolgt.
2) Der Brenner 19 wird zur Zündung des Abbrands mit Luftunterschuss betrieben. Dann tritt heißes CO/H₂-haltiges Gas in die Abströmkanäle auf der Rückseite der Partikelfilter 35 ein. Falls dort wie in Fig. 1 ein Oxidationskatalysator 50 angeordnet ist, so verbrennt an ihm das zugeführte CO/H₂-Gemisch und heizt den Partikelfilter gezielt lokal auf. Durch Positionierung des Oxidationskatalysators 50 und Einstellung der CO/H2-Menge über den Brenner 19 und die Regel- und Steuereinheit 52 kann ein vollständiger periodischer Rußabbrand ohne unzulässig hohe Abbrandtemperaturen erreicht werden.

Die für einen periodischen Filterabbrand notwendige Wärmezufuhr zum Zünden des Abbrands lässt sich ähnlich wie bei der Regeneration des NOₓ-Speicherkatalysators 33 dadurch wesentlich verringern, dass mindestens zwei baugleiche Abgaskonvertermodule parallel betrieben werden, wobei der Durchsatz durch den zu regenerierenden Partikelfilter 35 zum Zündens des Rußabbrands deutlich reduziert wird.

In den Ausführungsformen des Abgaskonverters 1 gemäß den Figuren 15 und 16 ist der Partikelfilter 35 am oberen Endbereich der Einströmkanäle 6, also in dem dem Umlenkbereich 9 zugewandten Bereich derselben angeordnet. Der z.B. taschenförmige Partikelfilter 35, wird vom dem eintretenden Abgasstrom 2 aus den Einströmkanälen 6 durchströmt und der durch den Partikelfilter 35 gefilterte Abgasstrom tritt seitlich aus den Taschen des Partikelfilter 35 in die Umströmkanäle 38 über.

Der Partikelfilter 35 ist an seinem Einströmende partikeldicht in einem von dem Gehäuse 5 gebildeten Filterkanal 36 eingepasst und in Strömungsrichtung des Abgasstroms 2 hinter einem Filtervorraum 37 angeordnet. Das den Partikelfilter 35 verlassende, partikelfreie Gas wird in seitlichen Kanälen 38 außerhalb des Filterkanals 35 geführt und gelangt über seitliche Öffnungen 39 in der Wandung des Gehäuses 5 in die offenen Ausströmkanäle 7, in denen es wie bei den zuvor beschriebenen Ausführungen zurückströmt.

Der katalytische Brenner 19 ist in diesem Fall so anzuordnen, das sein Abgas in den Filtervorraum 37 einströmt und gleichmäßig auf alle Kanäle oder Taschen des Partikelfilters 35 verteilt wird (nicht dargestellt). Auf der Abströmseite des Partikelfilters 35 und/oder in den Ausströmkanälen 7 können Oxidationskatalysatoren 34, 50 angeordnet sein, um die beim Abbrand der Partikelfilterbeladung häufig auftretenden Schadstoffe, wie Kohlenmonoxid und unverbrannte Kohlenwasserstoffe umzusetzen oder um durch im Brenner 19 erzeugtes CO/H₂-Gas zu verbrennen und damit gezielt Wärme zur Regeneration des Partikelfilters einzutragen.

Der durch NO₂ bewirkte oder verstärkte Rußabbrand nach dem sogenannten CRT-Verfahren lässt sich in dem Aufbau nach den Figuren 1, 15 und 16 zweckmäßig dadurch realisieren, dass in den geschlossenen Einströmkanälen 6 vor dem Eintritt in den Filter ein Katalysator 15 angeordnet ist, der NO zu NO₂ aufoxidiert.

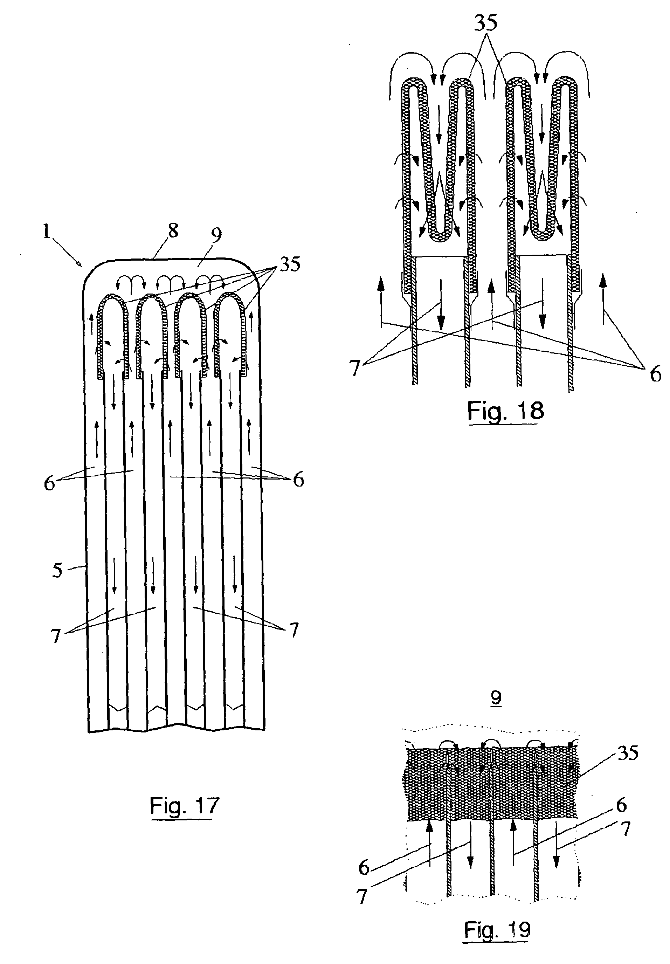

Die Figuren 17, 18 und 19 zeigen alternative Ausführungsformen des Partikelfilters 35. Dabei finden der Zustrom zu dem Partikelfilter 35 und der Abstrom aus demselben im Gegenstrom bzw. im gekreuzten Gegenstrom statt. Dadurch wird die Gefahr eines unkontrollierbaren Temperaturanstiegs beim Abbrand des Partikelfilters 35 im Vergleich zu der herkömmlichen Gleichstromanordnung minimiert.

In Fig. 17 und 18 sind am Eintritt der Ausströmkanäle 7 Partikelfilter 35 angebracht, die als Taschen aus poröser Keramik, aus Gewebe oder aus Faservlies ausgebildet sind und durch die der Abgasstrom 2 aus den Einströmkanälen 6 in die Ausströmkanäle 7 übertritt. Durch die in Fig. 18 dargestellte mehrfache Faltung der Filtertasche kann eine Erhöhung der wirksamen Filterfläche des Partikelfilters 35 erreicht werden.

In den Fig. 17 und 18 erfolgt die Durchströmung der Filtertaschen 35 von außen nach innen. Alternativ können die Filtertaschen 35 auch wie in Fig. 1 am Austritt der Einströmkanäle 6 angebracht werden, so dass die Filterung von innen nach außen erfolgt. Das bietet sich besonders für die in den Figuren 13 und 14 dargestellte Ausführung der Einströmkanäle 6 an, die sich besonders einfach mit einem solchen nach dem Gegenstromprinzip arbeitenden Partikelfilter 35 versehen lassen, indem die Öffnungen 27 durch in die obere Faltung eingelegte Filtermaterialien verschlossen werden. Alternativ kann bei der Ausführung des Abgaskonverters 1 gemäß den Figuren 13 und 14 das Material der seitlichen Wandungen 10 im Bereich der oberen Faltung durch ein Filtermaterial ersetzt werden.

Ein eigenständiger Gegenstromfilter lässt sich des Weiteren auch aus einem flexiblen Band aus Filtermaterial dadurch herstellen, dass das Band in gleicher Weise wie die Trennwand in den Figuren 13 und 14 mäanderförmig in einem Gehäuse angeordnet wird.

Neben der Abscheidung und Fixierung der zu entfernenden Partikel mittels des Partikelfilters 35, der hinreichend fein ausgeführt ist, kann alternativ oder zusätzlich auch die Verweilzeit der Partikel in dem Umlenkbereich 9 im Vergleich zu der Verweilzeit des Gases so verlängert werden, dass diese für die gewünschte Umwandlung ausreicht. Das wird insbesondere bei ausreichend hoher Temperatur im Umlenkbereich 9 der Fall sein. Zum Erreichen dieser Verlängerung der Verweilzeit sind poröse Materialien mit großer innerer Oberfläche, wie beispielsweise offenporige Schäume, Fasergeflechte oder Vliese geeignet, die in den Einströmkanälen 6 und/oder den Ausströmkanälen 7 in dem Umlenkbereich 9 angeordnet sind, wie dies in Fig. 19 dargestellt ist. Die Partikelabscheidung kann durch elektrostatische Aufladung, zu welcher innerhalb des Gehäuses 5 entsprechende, nicht dargestellte Vorrichtungen angeordnet sein können, erhöht werden. Die Umwandlungstemperatur der abgeschiedenen Partikel kann in bekannter Weise durch katalytisch wirkende Beschichtung der porösen Materialien oder die Zugabe katalytisch wirkender Substanzen zum Kraftstoff erniedrigt werden.

### Keramik-Module als Wärmetauscher, als Katalysatorträger und für die Partikelfilterung

Wie in US-PS 4,271,110 beschrieben, eignen sich Wabenmonolithe mit rechteckigem Einzelkanalquerschnitt als Parallelkanal-Wärmetauscher, wenn jede zweite Kanalreihe stirnseitig verschlossen wird. Die stirnseitig verschlossenen Reihen müssen dann durch seitliche Öffnungen an beiden Enden des Monoliths durchströmt werden, wodurch ein Parallelkanalpaket 16 zwischen aufeinander folgenden Kanalreihen 6, 7 entsteht, das einen effizienten Wärmetausch zwischen den Kanalreihen der Einströmkanäle 6 und der Ausströmkanäle 7 ermöglicht.

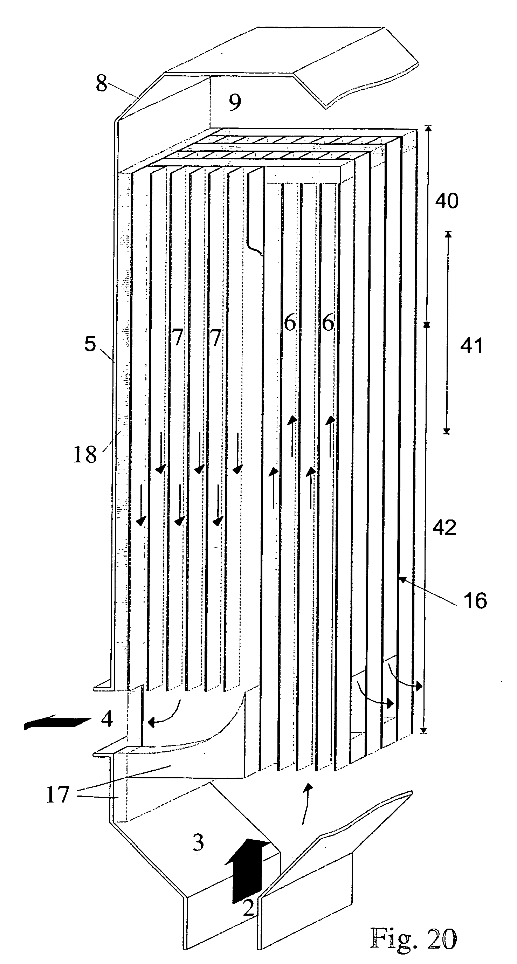

Übertragen auf die in Fig. 1 gezeigte Strömungsführung ist eine erfindungsgemäße Parallelkanalanordnung 16 auf Basis eines Wabenmonoliths wie in Fig. 20 gezeigt aufgebaut. Aus dem Einlassbereich 3 erfolgt die Zuströmung des Abgases 2 in die stirnseitig offenen Kanalreihen 6 und durch diese in Richtung Haube 8. Falls keine Partikelfilterung erforderlich ist, sind alle Monolithkanäle im Umlenkbereich 9 im Gegensatz zur Darstellung in Fig. 20 offen, so dass das Abgas 2 im Umlenkbereich 9 von den Einströmkanalreihen 6 in die Ausströmkanalreihen 7 übertritt und durch diese im Gegenstrom in Richtung Auslassbereich 4 strömt. Hier sind die Ausströmkanalreihen seitlich geschlitzt und zum Einlassbereich 3 hin durch ein Dichtmaterial 17 verschlossen, so dass das Abgas seitlich austritt. Im Umlenkbereich 9 wird dem Abgas 2 wie in Fig. 1 das Gas des katalytischen Brenners 31 zugemischt, der hier nicht dargestellt ist. Zur Schadstoffumwandlung sind die Wände der Kanalreihen wie in Fig. 1 über einen Katalysatorbereich 41 mit Katalysatoren beschichtet.

Im Fall von Dieselabgas wird der Partikelfilter erfindungsgemäß dadurch in den Monolith integriert, dass der Monolith zumindest im Filterbereich 40 aus einem porösen, filternden Material besteht. Dann werden alle Einströmkanalreihen 6 an ihrem Austrittsende im Umlenkbereich 9 verschlossen, so dass das Abgas durch die porösen Monolithkanalwände in die Ausströmkanäle 7 übertreten muss, und dabei wie in einem herkömmlichen Dieselrussfilter durch die Kanalwände gefiltert wird. Die Strömungsführung und die Anordnung der Katalysatoren sind dabei vergleichbar zu Fig. 1. Damit ein ausreichender Wärmetauscherbereich 42 des Monoliths für den reinen Wärmetausch ohne Filterung genutzt werden kann und damit das gefilterte Abgas vollständig an den Katalysatoren 15, 33, 34 vorbeigeführt wird, müssen die Wände der Einströmkanäle über die gewünschte Länge weitgehend gasdicht versiegelt werden. Dies kann in bekannter Weise z.B. durch Beschichten oder Tränken und nachfolgendes Dichtbrennen erfolgen. Die Parallelkanalanordnung 16 in Form des Monoliths ist wie in den anderen Beispielen mit einer vorzugsweise flexiblen Dichtungseinrichtung 18 in das Gehäuse 5 eingepasst und fixiert.

Anstelle eines Monoliths lässt sich erfindungsgemäß mit gleicher Funktionalität auch eine Parallelkanalanordnung 16 aus einem Bündel poröser Röhrchen als Einströmkanäle 6 aufbauen (nicht dargestellt). Dabei werden alle Röhrchen des Bündels wie im Fall des Monolithen über eine bestimmte Länge versiegelt sowie an ihrer Innen- und Außenfläche mit dem entsprechenden Katalysator versehen. Außerdem werden die Röhrchen an ihren Einströmenden in ein Dichtmaterial 17 eingebettet, so dass der Einlassbereich 3 weitgehend gasdicht vom Auslassbereich 4 getrennt ist. Die Strömungsführung erfolgt dann wieder wie beim Monolith analog Fig. 1, wobei die Ausströmkanäle 7 durch den Zwischenraum zwischen den Röhrchen 6 gebildet werden und Distanzelementen 43 in Form von Lochscheiben oder Gitter auf verschiedenen Höhen des Rohrbündels für einen gleichmäßigen Rohrabstand sorgen. Die Distanzelemente 43 können dabei wie bei Rohrbündelapparaten bekannt für eine radial symmetrische Kreuz-Gegenstromführung des Abgases 2 sorgen, wobei sich der Auslassbereich 4 über den gesamten Umfang des Rohrbündels erstrecken kann. Neben kreisförmigen Röhrchen 6 kommen auch Röhrchen mit nichtkreisförmigem Querschnitt, insbesondere solche mit einer erhöhten inneren Wandoberfläche (z.B. Well-, Riefen- oder Kleeblattstrukturen) in Frage.

Die poröse Grundstruktur der Monolithe oder Röhrchen kann in bekannter Weise aus keramischen oder metallischen Komponenten bestehen und z.B. durch Extrudieren und Sintern hergestellt werden. Dabei wird vorzugsweise eine gröber poröse Grundstruktur auf der Seite der Einströmkanäle 6 mit einer feinen porösen Deckschicht für die eigentliche Filterung versehen.

### Integration unterschiedlicher Abgasbehandlungsfunktionen

Die zuvor beschriebenen verschiedenen Umwandlungsfunktionen können in Abhängigkeit vom jeweiligen Anwendungsfall in den Abgaskonverter 1 integriert werden. Nachfolgend wird dies nochmals beispielhaft für die vollständige Dieselabgasreinigung an der Ausführungsform des Abgaskonverters 1 gemäß Fig. 1 zusammengefasst. Hier sind die Einströmkanäle 6 und die Ausströmkanäle 7 wie bei der Ausführungsform gemäß der Figuren 13 und 14 aus einem mäanderförmig nach oben und unten geführten Blechband geformt. Das Blechband ist in dem Filterbereich 40 im Bereich der oberen Faltung perforiert und von innen mit einem für die Filterung des bei Dieselbrennkraftmaschinen entstehenden Rußes geeigneten Filtergewebe belegt, so dass auf diese Weise der Partikelfilter 35 entsteht. Beim Durchtritt des Abgases durch das Gewebe der Partikelfilter 35 wird der Ruß abgeschieden. Wenn hierbei vor Eintritt in den Partikelfilter der Oxidationskatalysator 15 vorgesehen ist, der im Abgas enthaltenes NO zu NO₂ aufoxidiert, kann dies nach dem CRT-Verfahren zu einem kontinuierlichen, zumindest teilweisem Abbrand des Rußes führen. Der nicht abgebrannte Ruß wird in größeren Abständen durch einen über den katalytischen Brenner 19 ausgelösten Temperaturanstieg gezündet. Das gefilterte Abgas strömt in den Ausströmkanälen 7 über den NOₓ-Speicherkatalysator 33, an dem das restliche NO und NO₂ gebunden wird.

An der Haube 8 des Gehäuses 5 ist zur Zufuhr von Wärme und reduzierendem Gas der katalytische Brenner 19 angeordnet, der für die Aufheizung bei Kaltstart, für das Zünden des Rußabbrands, für die Bereitstellung eines CO und H₂-haltigen Regenerationsgases für die Regeneration des NOₓ-Speicherkatalysators 33 und gegebenenfalls für eine Hochtemperaturregeneration des NOₓ-Speicherkatalysators 33 bei einer eventuellen Sulfatvergiftung sowie zur gezielten Wärmefreisetzung an einem Oxidationskatalysator 50 an der Ausströmseite des Partikelfilters 35 verwendet werden kann.

Der katalytische Brenner 19 kann zu diesen Zwecken mit einem veränderlichen Kraftstoff-Gasgemisch betrieben und mittels der Steuer- und Regeleinheit 52 über die in den Bereichen 40 und 41 innerhalb des Abgaskonverters 1 gemessenen Temperaturen in seiner Heizleistung geregelt werden. Die Steuer- und Regeleinrichtung 52 stellt sicher, dass die Katalysatoren 15 33, 34 stets in einem optimalen Temperaturbereich arbeiten und der katalytische Brenner 19 in den notwendigen Intervallen ein reduzierendes Gas zur Verfügung stellt.

Der NOₓ-Speicherkatalysator 33 wird, wie oben erläutert, in kürzeren periodischen Abständen durch ein in dem katalytischen Brenner 19 erzeugtes Gemisch aus Wasserstoff und Kohlenmonoxid regeneriert. Dabei etwa durchbrechendes Regenerationsgas kann an dem nachfolgenden Oxidationskatalysator 34 mit Sauerstoffspeicherfunktion umgesetzt werden.

In nicht dargestellter Weise kann der Abgasstrom 2 zwischen der Brennkraftmaschine und dem Abgaskonverter 1 gekühlt werden, um eine Überhitzung des Abgaskonverters im Hochlastbetrieb zu vermeiden.

Bei Abgasreinigungsverfahren, die eine periodische Regeneration eines Speichermaterials erfordern, wie zum Beispiel im Falle des NOₓ-Speicherkatalysators 33 oder des Partikelfilters 35, kann der Abgaskonverter 1 aus mehreren parallel durchströmten Einheiten bestehen, wobei jeweils nur eine Einheit bei reduziertem Abgasdurchsatz regeneriert wird. Dadurch kann der Kraftstoffverbrauch deutlich reduziert werden.

In den Abgaskonverter 1 können in nicht dargestellter Weise auch die Funktionen eines Abgasschalldämpfers und einer Standheizung integriert sein, so dass mehrere Komponenten in einer Baueinheit zusammengefasst werden können. Zur Aufgabe der Abgasschalldämpfung können zum Beispiel die geschlossenen Einströmkanäle 6 im Parallelkanalpaket 16 unterschiedlich lang ausgeführt sein. Für Heizzwecke kann, wie in Fig. 1 gezeigt, vorübergehend oder dauernd über einen in der Haube 8 installierten Wärmetauscher 51 Wärme für Heizzwecke abgezogen werden. Auf diese Weise lässt sich ein Verfahren und eine Vorrichtung zur kombinierten Abgasreinigung bei einem Kraftfahrzeug, zur Abgasschalldämpfung und/oder zur Bereitstellung von Wärme für die Fahrzeuginnenraumheizung bereit stellen, bei dem alle für die Abgasreinigung, die Abgasschalldämpfung und/oder die Wärmeauskopplung benötigten Elemente in einem Gerät zusammengefasst sind.

## Patentansprüche

1. Verfahren zur Reinigung von Abgasen mit brennbaren und NOₓ-haltigen Abgasbestandteilen, insbesondere aus mager betriebenen Brennkraftmaschinen, in einem Abgaskonverter (1), mindestens bestehend aus einem Wärmetauscher (12) mit in dessen Einström-(6) und/oder Ausströmkanälen (7) angeordneten Katalysatoren (15,33), in dem einströmendes Abgas (2) im Wärmetausch mit ausströmendem Abgas aufgeheizt wird, und wobei dem Abgas Wärme zugeführt wird, wobei
- das eintretende Abgas (2) ohne Umlenkung und verstopfungsempfindliches Strömungshindernis in die Einströmkanäle (6) des Wärmetauschers (12) eintritt und diese bis zu einem Umlenkbereich (9) durchströmt, **dadurch gekennzeichnet, dass**
- dem Abgas mittels eines im Umlenkbereich (9) angeordneten, elektrisch beheizbaren, mit wenigstens einem Katalysator (31,32) versehenen Brenners (19) Wärme in Form von Brennerabgas zugeführt wird, wobei der Brenner (19) mit Kraftstoff und Luft und/oder Motorabgas so betrieben wird, dass er entweder ein oxidierendes oder ein reduzierendes (im wesentlichen CO- und H₂-haltiges) Abgas liefert,
- das Brennerabgas dem aus den Einströmkanälen (6) austretenden Gas zugemischt wird und gemeinsam mit demselben in die Abströmkanäle eintritt und dort mittels wenigstens eines sich in den Abströmkanälen (7) befindlichen Entstickungskatalysators (33) von Stickoxyden gereinigt wird,
- wobei Gas- und Kraftstoffdurchsatz des Brennerabgases von einer Steuer- und Regeleinheit (52) so eingestellt werden, dass
- der Katalysator (15,33) bei Kaltstart schnell auf die optimale Betriebstemperatur erwärmt und bei dieser Temperatur gehalten wird und
- zur Regeneration des Entstickungskatalysators (33) in regelmäßigen Abständen ein reduzierendes Brennerabgas erzeugt wird.

2. Verfahren nach Anspruch 1 zur Reinigung von Abgasen mit brennbaren, NOₓ-haltigen und partikel- oder rußförmigen Abgasbestandteilen, insbesondere aus Dieselmotoren,
**dadurch gekennzeichnet, dass**
- das eintretende Abgas (2) von den Einströmkanälen (6) in einen im Umlenkbereich (9) angeordneten Partikelfilter (35) gelangt und durch den Partikelfilter (35) in die Abströmkanäle (7) übertritt,
- wobei Gas- und Kraftstoffdurchsatz des Brennerabgases von einer Steuer- und Regeleinheit (52) so eingestellt werden, dass
- die Temperatur des Partikelfilters (35) entweder dauernd auf einem so hohen Wert gehalten wird, dass der abgeschiedene Ruß abbrennt oder die Temperatur periodisch auf einen für den Rußabbrand erforderlichen Wert angehoben wird.

3. Verfahren nach Anspruch 2, wobei die für die fortlaufende oder periodische Regeneration des Partikelfilters (35) erforderliche Temperatur desselben **dadurch** eingestellt wird, dass reduzierendes Brennerabgas auf einen auf der Ausströmseite des Partikelfilters (35) und in thermischem Kontakt mit diesem angeordneten Oxidationskatalysator (50) verbrannt wird.

4. Verfahren nach Anspruch 1, 2 oder 3, wobei zur Schwefelregeneration eines den Entstickungskatalysator (33) bildenden NOₓ-Speicherkatalysators die notwendigen Temperatur und Zusammensetzung des Abgases mittels der Steuer- und Regeleinheit (52) in periodischen Abständen eingestellt wird.

5. Verfahren nach einem der Ansprüche 1 bis 4, **dadurch gekennzeichnet, dass** alle für die Abgasreinigung, die Abgasschalldämpfung und/oder die Wärmeauskopplung benötigten Elemente in einem Abgaskonverter (1) zusammengefasst sind, wobei die Schalldämpfung durch unterschiedlich lange Ein- und Ausströmkanäle (6,7) und/oder durch andere passive oder aktive schalldämpfende Elemente im Einlassbereich (3), im Auslassbereich (4) und/oder im Umlenkbereich (9) einer Haube (8) verstärkt wird und die Auskopplung der Wärme insbesondere für eine Innenraumheizung **dadurch** erfolgt, dass das Abgas im Umlenkbereich (9) und/oder das heiße Gas eines katalytischen Brenners (19) ganz oder teilweise über einen dafür geeigneten Wärmetauscher (51) geleitet wird.

6. Verfahren nach einem der Ansprüche 1 bis 5, **dadurch gekennzeichnet, dass** mindestens zwei im wesentlichen baugleiche Abgaskonverter (1) parallel betrieben werden und für den Zeitraum der Regeneration des NOₓ-Umwandlungs- und/oder NOₓ-Speicherkatalysators (33) oder des Partikelfilters (35) der Abgasstrom durch die zu regenerierende Einheit gedrosselt wird, so dass die Regeneration mit einem deutlich reduzierten Zusatzenergie- oder Regenerationsmittelverbrauch durchgeführt werden kann.

7. Vorrichtung zur Reinigung von Abgasen mit brennbaren, NOₓ-haltigen und/oder partikel- oder rußförmigen Abgasbestandteilen, insbesondere aus mager betriebenen Brennkraftmaschinen, mit folgenden Merkmalen;
- einem Abgaswärmetauscher (12), welcher ein Gehäuse (5) und mehrere in dem Gehäuse (5) nebeneinander angeordnete Einströmkanäle (6) und zwischen den Einströmkanälen (6) sich befindliche Ausströmkanäle (7) aufweist, wobei die Einströmkanäle (6) oder die Ausströmkanäle (7) an ihrer Mantelfläche (10,11) allseitig geschlossen sind und zusammen mit dem Gehäuse (5) die dazwischen liegenden Ausströmkanäle (7) oder Einströmkanäle (6) bilden, wobei die Einströmkanäle (6) und die Ausströmkanäle (7) zusammen eine Parallelkanalanordnung (16) bilden, wobei zum Erreichen eines gleich bleibenden Abstands zwischen benachbarten Einströmkanälen (6) oder Ausströmkanälen (7) entweder Distanzelemente (14) in denselben angeordnet sind, oder sich die seitlichen Wandungen (10) der Einströmkanäle (6) oder Ausströmkanäle (7) aufgrund einer Profilierung gegenseitig abstützen und wobei das Gehäuse (5) am Übergang von den Einströmkanälen (6) in die Ausströmkanäle (7) einen Umlenkbereich (9) bildet,
- einem elektrisch beheizbaren katalytischen Brenner (19), welcher in dem Umlenkbereich (9) oder einem Filtervorraum (37) des Abgaswärmetauschers (12) angeordnet ist und mit Kraftstoff und Luft und/oder Motorabgas so betrieben wird, dass er entweder ein oxidierendes oder ein reduzierendes (im wesentlichen CO- und H₂-haltiges) Abgas liefert,
- Reinigungskomponenten (15,33,34,35) für die Umwandlung, die Abscheidung oder die Speicherung der brennbaren, NOₓ-haltigen und/oder partikel- oder rußförmigen Abgasbestandteile, welche innerhalb des Abgaswärmetauschers (12) angeordnet sind, wobei in den Einströmkanälen (6) und/oder Ausströmkanälen (7) des Wärmetauschers (12) Katalysatoren (15,33) angeordnet sind und sich in den Abströmkanälen (7) ein Entstickungskatalysator (33) befindet,
- einen Einlassbereich (3) und einen Auslassbereich (4), die durch das Gehäuse (5) gebildet sind,
- und einer Steuer- und Regeleinheit (52) zur Einstellung des Gas- und Kraftstoffdurchsatzes des Brennerabgases derart, dass
der Katalysator (15,33) bei Kaltstart schnell auf die optimale Betriebstemperatur erwärmt und bei dieser Temperatur gehalten wird und
zur Regeneration des Entstickungskatalysators (33) in regelmäßigen Abständen ein reduzierendes Brennerabgas erzeugt wird,
- wobei die Einströmkanäle (6) und/oder die Ausströmkanäle (76) am Einlassbereich (37) mit den jeweils benachbarten Kanälen (7,6) und dem Gehäuse (5) durch Schweißung, Lötung, Falzung und/oder eine Dichtungseinrichtung (17) so verbunden und gegeneinander abgedichtet sind, dass kein oder nur ein vernachlässigbarer Leckstrom zwischen dem Einlassbereich (3) und dem Auslassbereich (4) auftritt,
- und wobei das eintretende Abgas (2) ohne Umlenkung und verstopfungsempfindliches Strömungshindernis in die Einströmkanäle (6) des Wärmetauschers (12) eintritt und diese bis zu dem Umlenkbereich (9) durchströmt.

8. Vorrichtung nach Anspruch 7, **dadurch gekennzeichnet, dass** der Einlassbereich (3) derart angeordnet ist, dass die Einströmkanäle (6) axial angeströmt werden, und dass der Auslassbereich (4) derart angeordnet ist, dass die Abgase die Ausströmkanäle (7) seitlich verlassen..

9. Vorrichtung nach einem der Ansprüche 7 oder 8, **dadurch gekennzeichnet, dass** die Einströmkanäle (6) durch einfache oder durch mehrfache, ziebharmonikaartige Faltung eines profilierten oder ebenen Blechbandes hergestellt sind, wobei die Faltung längs oder quer zu der Hauptströmrichtung in den Einsrtrömkanälen (6) erfolgt.

10. Vorrichtung nach einem der Ansprüche 7 bis 9, **dadurch gekennzeichnet, dass** die Einströmkanäle (6) im Einlassbereich (3) durch Faltung, Zusammenführung von Seitenwänden (10) der Einströmkanäle (6) und/oder Löt- oder Schweißverbindungen verbunden und/oder durch Kappen (13) derart abgedeckt sind, dass ein strömungsgünstiger axialer Einlauf entsteht.

11. Vorrichtung nach einem der Ansprüche 7 bis 10, **dadurch gekennzeichnet, dass** die an ihrer Mantelfläche allseitig geschlossenen Einströmkanäle (6) oder Ausströmkanäle (7) an ihrer Stirnfläche im Umlenkbereich (9) mit einem Partikelfilter (35) verbunden sind oder an ihrer Stirnfläche im Umlenkbereich (9) verschlossen sind und davor über die Länge des Filterbereichs (40) seitliche Öffnungen aufweisen, die aus einem porösen Material bestehen oder damit abgedeckt sind.

12. Vorrichtung nach Anspruch 11, **dadurch gekennzeichnet, dass** die Gasaustrittseite des Partikelfilters (35) bzw. des Filterbereichs (40) mit einem Oxidationskatalysator versehen ist

13. Vorrichtung nach einem der Ansprüche 7 bis 12, **dadurch gekennzeichnet, dass** der elektrisch beheizbare katalytische Brenner (19) einen zumindest teilweise elektrisch beheizbaren Katalysator (31,32) aufweist, der mit einem Gemisch aus einem sauerstoffhaltigen Gas (30) und Kraftstoff (29)oder einem Gemisch aus Gas (30), Kraftstoff (29) und Wasser beaufschlagt wird, wobei die Gas-, Kraftstoff- und Wasserzufuhr durch eine Regel- und Steuereinheit (52) so veränderbar ist, dass der Kraftstoff entweder vollständig verbrannt wird oder zumindest teilweise in CO und H₂ umgewandelt wird, und wobei der katalytische Brenner (19) derart mit einer Haube (8) des Gehäuses (5) verbunden ist, dass das Brenngas in den Umlenkbereich (9) bzw. den Filtervorraum (37) zugeführt und auf die Kanäle des Filters (35) bzw. die Ausströmkanäle (7) gleichmäßig verteilt wird, wobei die gleichmäßige Verteilung durch Einbauten wie Gitter, Lochbleche und/oder durch eine zweckmäßige Strömungsführung sichergestellt wird.

## Claims

1. A method for purifying exhaust gases comprising combustible and NOₓ-containing exhaust-gas constituents, in particular from lean-burn internal combustion engines, in an exhaust-gas converter (1), at least comprising a heat exchanger (12) with catalysts (15,33) arranged in its inflow passages (6) and/or outflow passages (7), in which heat exchanger exhaust gas (2) which flows in is heated by exchanging heat with exhaust gas which flows out, heat being supplied to the exhaust gas, wherein
- the incoming exhaust gas (2) enters the inflow passages (6) of the heat exchanger (12) without encountering any diversion or flow obstacle which is susceptible to blockages, and flows through these inflow passages as far as a diversion region (9), wherein
- heat in the form of burner exhaust gas being fed to the exhaust gas by means of a burner (19), which is arranged in the diversion region (9), can be electrically heated and is provided with at least one catalyst (31,32), the burner (19) being operated with fuel and air and/or engine exhaust gas in such a way that it supplies either an oxidizing or a reducing (substantially CO- and H2-containing) exhaust gas,
- the burner exhaust gas is admixed to the gas which emerges from the inflow passages (6) and enters the outflow passages together with this gas, and there nitrogen oxides are removed from it by means of at least one deNOxing catalyst (33) which is present in the outflow passages (7),
- The gas and fuel throughput of the burner exhaust gas being set by a control unit (52) in such a way that
- during a cold start the catalyst (15,33) is quickly heated to the optimum operating temperature and is held at this temperature, and
- a reducing burner exhaust gas is generated at regular intervals to regenerate the deNOxing catalyst (33).

2. The method as claimed in claim 1 for purifying exhaust gases comprising combustible, NOₓ-containing exhaust-gas constituents in particulate or soot form, in particular from diesel engines, **characterized in that**
- the incoming exhaust gas (2) passes from the inflow passages (6) into a particulate filter (35) arranged in the diversion region (9) and passes through the particulate filter (35) into the outflow passages (7),
- the gas and fuel throughput of the burner exhaust gas being set by a control unit (52) in such a way that
- the temperature of the particulate filter (35) is either permanently kept at such a high level that the soot which is deposited burns off, or the temperature is periodically raised to a level required for the soot to burn off.

3. The method as claimed in claim 2, in which the temperature of the particulate filter (35) which is required for continuous or periodic regeneration thereof is set by reducing burner exhaust gas being burnt on an oxidation catalyst (50) which is arranged on the outflow side of the particulate filter (35) and in thermal contact with the latter.

4. The method as claimed in claim 1, 2 or 3, in which the required temperature and composition of the exhaust gas for sulfur regeneration of an NOₓ storage catalyst which forms the deNOxing catalyst (33) is set at periodic intervals by means of the control unit (52).

5. The method as claimed in one of claims 1 to 4, **characterized in that** all of the elements which are required for the exhaust gas purification, the exhaust gas muffling and/or the discharge of heat are combined in one exhaust-gas converter (1), the muffling being boosted by different lengths of inflow and outflow passages (6,7) and/or by other passive or active muffling elements in the inlet region (3), in the outlet region (4) and/or in the diversion region (9) of a hood(8), and the discharge of heat, in particular for heating a passenger compartment, being effected by the exhaust gas in the diversion region (9) and/or the hot gas from a catalytic burner (19) being partially or completely passed via a heat exchanger (51) which is suitable for this purpose.

6. The method as claimed in one of claims 1 to 5, **characterized in that** at least two substantially identical exhaust-gas converters (1) are operated in parallel, and for the period of regeneration of the NOₓ conversion and/or NOₓ storage catalyst (33) or of the particulate filter (35), the exhaust-gas stream through the unit to be regenerated is throttled, so that the regeneration can be carried out with a considerably reduced consumption of additional energy or regeneration agent.

7. An apparatus for purifying exhaust gases comprising exhaust-gas constituents which are combustible, contain NOₓ and/or are in particulate or soot form, in particular from lean-burn internal combustion engines, having the following features:
- an exhaust-gas heat exchanger (12), which includes a housing (5) and a plurality of inflow passages (6), arranged next to one another in the housing (5), and outflow passages (7) located between the inflow passages (6), the inflow passages (6) or the outflow passages (7) being closed on all sides at their lateral surfaces (10,11) and, together with the housing (5), forming the outflow passages (7) or inflow passages (6) located between them, the inflow passages (6) and the outflow passages (7) together forming a parallel-passage arrangement (16), and to achieve a constant distance between adjacent inflow passages (6) or outflow passages (7), either spacer elements (14) are arranged therein, or the side walls (10) of the inflow passages (6) or outflow passages (7) are supported against one another on account of being profiled, and the housing (5) forms a diversion region (9) at the transition from the inflow passages (6) into the outflow passages (7),
- a catalytic electrically heated burner (19), which is arranged in the diversion region (9) or a filter admission space (37) of the exhaust-gas heat exchanger (12), and is operated with fuel and air and/or engine exhaust gas in such a way that it supplies either an oxidizing or a reducing (substantially CO- and H₂-containing) exhaust gas,
- purifying components (15,33,34,35) for the conversion, separation or storage of the exhaust-gas constituents which are combustible, contain NOₓ and/or are in particulate or soot form, which components are arranged within the exhaust-gas heat exchanger (12), in the inflow passages (6) and/or the outflow passages (7) of the heat exchanger (12) there being arranged catalysts (15,33) and in the outflow passages (7) there being present a NOxing catalyst (33),
- an inlet region (3) and an outlet region (4), which are formed by the housing (5),
- and a control unit (52) for setting the gas and fuel through put of the burner exhaust gas in such a way that during a cold start the catalyst (15,33) is quickly heated to the optimum operating temperature and is held at this temperature, and a reducing burner exhaust gas is generated at regular intervals to regenerate the deNOxing catalyst (33),
- the inflow passages (6) and/or the outflow passages (76), at the filter admission space (37), being connected to the respectively adjacent passages (7,6) and the housing (5) and sealed with respect to one another by welding, soldering, folding and/or a sealing device (17) in such a way that no leakage flow or only a negligible leakage flow occurs between the inlet region (3) and the outlet region (4),
- the incoming exhaust gas (2) entering the inflow passages (6) of the heat exchanger (12) without encountering any diversion or flow obstacle which is susceptible to blockages, and flows through these inflow passages as far as the diversion region (9).

8. The apparatus as claimed in claim 7, **characterized in that** the inlet region (3) is arranged in such a manner that the flow to the inflow passages (6) is in the axial direction, and **in that** the outlet region (4) is arranged in such a manner that the exhaust gases leave the outflow passages (7) laterally.

9. The apparatus as claimed in either of claims 7 or 8, **characterized in that** the inflow passages (6) are produced by single or multiple, concertina-like folding of a profiled or flat sheet-metal strip, the folding taking place longitudinally or transversely with respect to the main direction of flow in the inflow passages (6).

10. The apparatus as claimed in one of claims 7 to 9, **characterized in that** the inflow passages (6) in the inlet region (3) are connected by folding, combining side walls (10) of the inflow passages (6) and/or soldered or welded joins, and/or are covered by caps (13), in such a manner as to form an axial entry which is favorable in terms of flow.

11. The apparatus as claimed in one of claims 7 to 10, **characterized in that** the inflow passages (6) or outflow passages (7), which are closed on all sides at their lateral surface, are connected at their end face in the diversion region (9) to a particulate filter (35) or are closed at their end face in the diversion region (9) and before this have lateral openings, which consist of a porous material or are covered with a porous material, over the length of the filter region (40).

12. The apparatus as claimed in claim 11, **characterized in that** the gas exit side of the particulate filter (35) or of the filter region (40) is provided with an oxidation catalyst.

13. The apparatus as claimed in one of claims 7 to 12, **characterized in that** the catalytic electrically heatable burner (19) has an at least partially electrically heatable catalyst (31,32), which is acted on by a mixture of an oxygen-containing gas (30) and fuel (29) or a mixture of gas (30), fuel (29) and water, it being possible to alter the supply of gas, fuel and water by means of a control unit (52) in such a way that the fuel is either completely burnt or is at least partially converted into CO and H₂, and the catalytic burner (19) being connected to a hook (8) of the housing (5) in such a manner that the fuel gas is fed into the diversion region (9) or the filter admission space (37) and is uniformly distributed between the passages of the filter (35) or the outflow passages (7), the uniform distribution being ensured by internal fittings, such as grates, perforated metal plates and/or by a suitable flow guidance.

## Revendications

1. Procédé pour épurer des gaz d'échappement qui comprennent des constituants de gaz d'échappement combustibles et contenant des NOₓ, en particulier issus de moteurs à combustion interne qu'on fait fonctionner en régime pauvre, dans un convertisseur de gaz d'échappement (1) composé d'au moins un échangeur de chaleur (12) équipé de catalyseurs (15, 33) disposés dans ses canaux d'entrée (6) et/ou dans ses canaux de sortie (7), dans lequel un gaz d'échappement entrant (2) est chauffé par échange de chaleur avec un gaz d'échappement sortant, dans lequel de la chaleur est apportée au gaz d'échappement, et dans lequel le gaz d'échappement entrant (2) pénètre dans les canaux d'entrée (6) de l'échangeur de chaleur (12) sans changement de direction ni obstacle à l'écoulement sujet à l'obstruction, et les parcourant jusqu'à une région de changement de direction (9),
**caractérisé en ce que**
- de la chaleur est apportée au gaz d'échappement au moyen d'un brûleur (19) disposé dans la région de changement de direction (19), pouvant être chauffé électriquement et muni d'au moins un catalyseur (31, 32) sous la forme d'un gaz brûlé d'échappement, le brûleur (19) étant alimenté avec du carburant, de l'air et/ou du gaz échappement du moteur, de telle manière qu'il débite, soit un gaz échappement oxydant, soit un gaz d'échappement réducteur (contenant essentiellement du CO et du H₂),
- le gaz d'échappement du brûleur est mélangé au gaz sortant des canaux d'entrée (6) et il entre dans les canaux de sortie conjointement avec ce dernier et, là, il est épuré des oxydes d'azote au moyen d'au moins un catalyseur de dénitrification (33) qui se trouve dans les canaux de sortie (7),
- le débit de gaz et de carburant du gaz d'échappement du brûleur est réglé par une unité de commande et de régulation (52) de telle manière que
- lors d'un démarrage à froid, le catalyseur (15, 33) soit rapidement porté à la température de fonctionnement optimale et maintenu à cette température, et
- pour la régénération du catalyseur de dénitrification (33), un gaz d'échappement du brûleur de type réducteur est produit à intervalles réguliers.

2. Procédé selon la revendication 1 pour épurer des gaz d'échappement qui comprennent des constituants de gaz d'échappement combustibles, contenant des NOₓ et formés de particules et de suie, en particulier issus de moteurs diesel,
**caractérisé en ce que**
- en provenant des canaux d'entrée (6), le gaz d'échappement entrant (2) parvient dans un filtre à particules (35) disposé dans la région de changement de direction (9) et, en traversant le filtre à particules (36), pénètre dans les canaux de sortie (7),
- les débits de gaz et de carburant du gaz d'échappement du brûleur étant réglés par une unité de commande et de régulation (52), afin que
- soit la température du filtre à particules (35) soit maintenue en permanence à une valeur suffisamment élevée pour que la suie séparée brûle, soit la température soit relevée périodiquement à une valeur nécessaire pour la combustion de la suie.

3. Procédé selon la revendication 2, dans lequel la température du filtre à particules (35) qui est nécessaire pour la régénération continue ou périodique de ce filtre est réglée par le fait que le gaz d'échappement réducteur du brûleur est brûlé sur un catalyseur d'oxydation (50) disposé sur le côté de sortie du filtre à particules (35) et en contact thermique avec ce dernier.

4. Procédé selon la revendication 1, 2 ou 3, dans lequel, pour la régénération du soufre du catalyseur accumulateur de NOx qui forme le catalyseur de dénitrification (33), la température et la composition nécessaires du gaz d'échappement sont réglées à intervalles périodiques au moyen de l'unité de commande et de régulation (52).

5. Procédé selon l'une des revendications 1 à 4, **caractérisé en ce que** tous les éléments nécessaires pour l'épuration des gaz d'échappement, l'atténuation du bruit des gaz d'échappement et/ou le découplage thermique sont regroupés dans un convertisseur de gaz d'échappement (1), l'atténuation du bruit étant renforcée par des canaux d'entrée et de sortie (6, 7) de différentes longueurs et/ou par d'autres éléments d'atténuation du bruit, passifs ou actifs, dans la région d'admission (3), dans la région d'échappement (4) et/ou dans la région de changement de direction (9) d'un chapeau (8) et pour le découplage de la chaleur, en particulier pour qu'un chauffage de l'espace intérieur s'effectue par le fait qu'on fait passer le gaz d'échappement présent dans la région de changement de direction (9), et/ou le gaz chaud d'un brûleur catalytique (19), entièrement ou partiellement à travers un échangeur de chaleur (51) approprié pour cette opération.

6. Procédé selon l'une des revendications 1 à 5, **caractérisé en ce qu'**on fait travailler en parallèle au moins deux convertisseurs de gaz d'échappement sensiblement de même construction (1) et, pour la période de la régénération du catalyseur de conversion des NOx et/ou d'accumulation des NOx (33), ou du filtre à particules (35), on étrangle le courant de gaz d'échappement à travers l'unité à régénérer, de sorte que la régénération peut être exécutée avec une consommation considérablement réduite d'énergie ajoutée ou de moyens de régénération.

7. Dispositif pour épurer des gaz d'échappement qui comprennent des constituants de gaz d'échappement combustibles et contenant des NOx et/ou des constituants de gaz d'échappement formés de particules ou de suie, en particulier issus de moteurs à combustion interne qu'on fait fonctionner en régime pauvre, possédant les caractéristiques suivantes :
- un échangeur de chaleur de gaz d'échappement (12) qui comporte un boîtier (5), plusieurs canaux d'entrée (6) disposés les uns à côté des autres dans le boîtier (5), et des canaux de sortie (7) qui se trouvent entre les canaux d'entrée (6), les canaux d'entrée (6) ou les canaux de sortie (7) étant fermés de tous côtés sur leur surface latérale (10, 11) et formant, avec le boîtier (5), les canaux de sortie (7) ou d'entrée (6) selon le cas, qui se trouvent entre eux, les canaux d'entrée (6) et les canaux de sortie (7) formant ensemble un ensemble de canaux parallèles (16), cependant que, pour obtenir un écartement qui reste constant entre les canaux d'entrée (6) ou les canaux de sortie (7) voisins les uns des autres, soit des entretoises (14) sont disposées dans ces canaux, soit les parois latérales (10) des canaux d'entrée (6) ou des canaux de sortie (7) prennent appui les unes contre les autres sous l'effet d'un profilage, et cependant que le boîtier (5) forme une région de changement de direction (9) à la transition menant des canaux d'entrée (6) aux canaux de sortie (7),
- un brûleur catalytique (19) pouvant être chauffé électriquement qui est disposé dans la région de changement de direction (9) ou dans une préchambre de filtre (37) de l'échangeur de chaleur de gaz d'échappement (12) et qui est alimenté avec du carburant et de l'air et/ou du gaz d'échappement du moteur de telle manière qu'il débite, soit un gaz d'échappement oxydant, soit un gaz d'échappement réducteur (contenant essentiellement du CO et du H2),
- des composants d'épuration (15, 33, 34, 35) destinés à la conversion et à la séparation ou à l'accumulation des constituants des gaz d'échappement combustibles contenant des NOx et/ou formés de particules ou de suie, qui sont disposés à l'intérieur de l'échangeur de chaleur de gaz d'échappement (12), des catalyseurs (15, 33) étant disposés, dans les canaux d'entrée (6) et/ou dans les canaux de sortie (7) de l'échangeur de chaleur (12), et un catalyseur de dénitrification se trouvant dans les canaux de sortie (7),
- une région d'admission (3) et une région d'échappement (4) qui sont formées par le boîtier (5),
- et une unité de commande et de régulation (52) destinée à régler le débit de gaz et de carburant du gaz d'échappement du brûleur, et en ce que manière que,
lors d'un démarrage à froid, le catalyseur (15, 33) est porté rapidement à la température de fonctionnement optimale et est maintenu à cette température et
un gaz d'échappement de brûleur réducteur est produit à intervalles réguliers pour la régénération du catalyseur de dénitrification (33),
- dans la région d'admission (37), les canaux d'entrée (6) et/ou les canaux de sortie (76) étant réunis aux canaux (7, 6) respectivement voisins et au boîtier (5) par soudage, brasage, sertissage un et/ou par un dispositif d'étanchéité (17) et ajustés à joint étanche les uns par rapport aux autres de telle manière qu'il ne se produise aucun écoulement de fuite ou que seulement un écoulement de fuite négligeable entre la région d'admission (3) la région d'échappement (4), et
- le gaz d'échappement entrant (2) pénétrant dans les canaux d'entrée (6) de l'échangeur de chaleur (12) sans changement de direction ni obstacle de d'écoulement sujet à l'obstruction, et parcourant ces canaux jusqu'à la région de changement de direction (9).

8. Dispositif selon la revendication 7, **caractérisé en ce que** la région d'admission (3) est disposée de telle manière que les canaux d'entrée (6) soient attaqués axialement par le courant, et **en ce que** la région d'échappement (4) est disposée de manière que les gaz d'échappement quittent les canaux d'échappement (7) latéralement.

9. Dispositif selon l'une des revendications 7 ou 8, **caractérisé en ce que** les canaux d'entrée (6) sont produits par pliage simple ou multiple, en accordéon, d'une bande de tôle profilée ou plane, le pliage s'effectuant longitudinalement ou transversalement à la direction principale de l'écoulement dans les canaux d'entrée (6).

10. Dispositif selon l'une des revendications 7 à 9, **caractérisé en ce que** les canaux d'entrée (6) sont réunis dans la région d'admission (3) par pliage, rapprochement de parois latérales (10) des canaux d'entrée (6) et/ou par des assemblages brasés ou soudés et/ou recouverts par des capuchons (13) de manière qu'il se produise une entrée axiale favorable à l'écoulement.

11. Dispositif selon l'une des revendications 7 à 10, **caractérisé en ce que** les canaux d'entrée (6) ou les canaux de sortie (7), qui sont fermés de tous côtés sur leur surface latérale, sont réunis à un filtre à particules, à leur surface frontale, dans la région de changement de direction (9), ou sont obturés à leur surface frontale dans la région de changement de direction (9) et, en amont, présentent sur la longueur de la région (40) du filtre, des ouvertures latérales qui sont composées d'une matière poreuse ou recouvertes d'une telle matière.

12. Dispositif selon la revendication 11, **caractérisé en ce que** le côté de sortie de gaz du filtre à particules (35) ou de la région de filtre (40) est équipée d'un catalyseur d'oxydation.

13. Dispositif selon l'une des revendications 7 à 12, **caractérisé en ce que** le brûleur catalytique pouvant être chauffé électriquement (19) comporte un catalyseur (31, 32) pouvant être au moins en partie chauffé électriquement et qui est alimenté avec un mélange d'un gaz contenant de l'oxygène (30) et de carburant (29) ou avec un mélange de gaz (30), de carburant (29) et d'eau, l'amenée de gaz, de carburant et d'eau pouvant être réglée par une unité de régulation et de commande (52) afin que, soit le carburant soit entièrement brûlé, soit il soit au moins partiellement transformé en CO et H₂, et le brûleur catalytique (19) étant relié à un chapeau (8) du boîtier (5) de telle manière que le gaz de combustion soit introduit dans la région de changement de direction (9) ou dans la préchambre de filtre (37) et réparti uniformément sur les canaux du filtre (35) ou sur les canaux de sortie (7), la répartition uniforme étant assurée par des éléments intérieurs tels que des grilles ou des tôles perforées et/ou par un guidage approprié de l'écoulement.
